(19) Europäisches Patentamt
European Patent Office
Office européen des brevets

(11) **EP 4 640 645 A1**

(12) **EUROPEAN PATENT APPLICATION**

(43) Date of publication:
**29.10.2025 Bulletin 2025/44**

(21) Application number: **24205734.7**

(22) Date of filing: **10.10.2024**

(51) International Patent Classification (IPC):
$C03C\ 3/095^{(2006.01)}$    $C03C\ 4/00^{(2006.01)}$
$C03C\ 4/04^{(2006.01)}$    $C03C\ 4/14^{(2006.01)}$
$C03C\ 10/00^{(2006.01)}$    $C03C\ 21/00^{(2006.01)}$

(52) Cooperative Patent Classification (CPC):
**C03C 3/095; C03C 4/0092; C03C 4/04; C03C 4/14; C03C 10/0027; C03C 21/002; C03C 21/005;** C03C 2214/16

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.04.2024 CN 202410483544**

(71) Applicant: **CDGM Glass Co. Ltd.**
**Chengdu, Sichuan 610100 (CN)**

(72) Inventors:
• **HU, Bin**
**Chengdu, Sichuan, 610100 (CN)**

• **YUAN, Baoping**
**Chengdu, Sichuan, 610100 (CN)**
• **WANG, Changhong**
**Chengdu, Sichuan, 610100 (CN)**
• **CHEN, Xuemei**
**Chengdu, Sichuan, 610100 (CN)**
• **ZHANG, Jing**
**Chengdu, Sichuan, 610100 (CN)**

(74) Representative: **Meissner Bolte Partnerschaft mbB**
**Patentanwälte Rechtsanwälte**
**Postfach 86 06 24**
**81633 München (DE)**

(54) **PHOTOSENSITIVE GLASS MATERIAL, PHOTOSENSITIVE MICROCRYSTALLINE GLASS AND PHOTOSENSITIVE MICROCRYSTALLINE GLASS PRODUCT**

(57) The present invention provides a photosensitive glass material, including the following components in percentage by weight: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; 0.01-0.8% of $Ag_2O$, wherein $Li_2O/ZrO_2$ is 1.0-7.5, and the $R_2O$ is one or two of $Na_2O$ and $K_2O$. By reasonable component design, the photosensitive glass material of the present invention has a lower dielectric loss, and photosensitive microcrystalline glass and a photosensitive microcrystalline glass product made therefrom also have lower dielectric losses, and can reduce transmission losses of electric signals of application terminals during use.

EP 4 640 645 A1

**Description**

**FIELD OF TECHNOLOGY**

The present invention relates to a glass material, and in particular to a photosensitive glass material having a lower dielectric loss.

**BACKGROUND**

Photosensitive glass materials will undergo structural changes within the glass body under UV light irradiation to produce crystal nuclei, which will generate a large number of crystals in the irradiated area after continued heat treatment at a certain temperature. The part that has been exposed is highly crystallized, the glass becomes darker, and the transmittance decreases; for the part that has not been exposed, the glass is not crystallized and remains transparent, thereby to enable patterns to be made on the photosensitive glass materials by mask exposure.

With the development of the times, in some electronic products, the existence of a transmitter and a receiver of light signals, in a transmission path of the light signals, requires maintaining a higher transmittance and avoiding the interference of external light signals, and therefore the photosensitive glass material can be designed as required to have a specific light signal channel and shield the interference of stray light signals. In the prior art, the surface of the glass can be coated to achieve the above effects, but compared to coating on the surface of the glass, the photosensitive microcrystalline glass device with a pattern prepared from a photosensitive glass material has a crystallization region deep into the glass matrix, and therefore has no risk of coating shedding, and the crystallization region deep into the glass also can avoid crosstalk of the external light signals, and can improve the detection of the device. The photosensitive glass material in the prior art has a higher dielectric loss, and the transmission loss of the electric signals in the glass material is larger, and thus it is difficult to meet the use of high-performance electronic devices and the like.

**SUMMARY**

Based on the above reasons, the technical problem to be solved by the present invention is to provide a photosensitive glass material having a lower dielectric loss, and photosensitive microcrystalline glass and a photosensitive microcrystalline glass product made therefrom.

The solutions adopted by the present invention to solve the technical problem are:

A photosensitive glass material, characterized by comprising the following components in percentage by weight: $SiO_2$, $R_2O$, $Li_2O$, $Al_2O_3$, $ZrO_2$, $CeO_2$ and $Ag_2O$, wherein $Li_2O/ZrO_2$ is 1.0-7.5, the $R_2O$ is one or two of $Na_2O$ and $K_2O$, and dielectric loss $\tan\delta$ of the photosensitive glass material is below $11.0 \times 10^{-3}$.

Photosensitive microcrystalline glass, characterized by comprising the following components in percentage by weight: $SiO_2$, $R_2O$, $Li_2O$, $Al_2O_3$, $ZrO_2$, $CeO_2$ and $Ag_2O$, wherein $Li_2O/ZrO_2$ is 1.0-7.5, and the $R_2O$ is one or two of $Na_2O$ and $K_2O$.

A photosensitive microcrystalline glass product, characterized by comprising the following components in percentage by weight: $SiO_2$, $R_2O$, $Li_2O$, $Al_2O_3$, $ZrO_2$, $CeO_2$ and $Ag_2O$, wherein $Li_2O/ZrO_2$ is 1.0-7.5, and the $R_2O$ is one or two of $Na_2O$ and $K_2O$.

A glass cover plate, characterized by comprising the photosensitive glass material above, and/or the photosensitive microcrystalline glass above, and/or the photosensitive microcrystalline glass product above.

A device, characterized by comprising the photosensitive glass material above, and/or the photosensitive microcrystalline glass above, and/or the photosensitive microcrystalline glass product above, and/or the glass cover plate above.

The beneficial effects of the present invention are in that: by reasonable component design, the photosensitive glass material of the present invention has a lower dielectric loss, and photosensitive microcrystalline glass and a photosensitive microcrystalline glass product made therefrom also have lower dielectric losses, and can reduce transmission losses of electric signals of application terminals during use.

**BRIEF DESCRIPTION OF THE DRAWINGS**

Hereinafter, the embodiments of the present invention will be described in detail, but the present invention is not limited to the following embodiments, and may be implemented with appropriate changes within the scope of the purpose of the present invention. Moreover, with respect to the repeated description portion, there are instances where the description is appropriately omitted, which however does not thereby limit the gist of the invention.

The photosensitive microcrystalline glass and the photosensitive microcrystalline glass product of the present invention are materials having a crystalline phase (sometimes also referred to as crystal) and a glass phase, which are different from noncrystalline solids. The crystalline phase of the photosensitive microcrystalline glass and the photosensitive microcrystalline glass product can be distinguished by the peak angle appearing in the X-ray diffraction pattern analyzed by X-ray diffraction and/or determined by TEMEDX.

The inventor of the present invention has repeatedly experimented and studied on the specific components constituting the photosensitive microcrystalline glass and the photosensitive microcrystalline glass product, and obtained the photosensitive microcrystalline glass or the photosensitive microcrystalline glass product of the present invention by specifying the contents and content ratios thereof to be specific values and allowing a specific crystalline phase to precipitate.

In some embodiments, the photosensitive microcrystalline glass of the present invention includes one or more blackened parts and one or more transparent parts, wherein the transparent part refers to the part of the photosensitive microcrystalline glass having an average transmittance ($T_{400\text{-}800\,nm}$) above 85.0% at 400-800 nm wave band range, when the photosensitive microcrystalline glass is processed to a thickness of 0.2-1.5 mm, and the blackened part refers to the part of the photosensitive microcrystalline glass having an average transmittance ($T_{400\text{-}800\,nm}$) below 5.0% at 400-800 nm wave band range, when the photosensitive microcrystalline glass is processed to a thickness of 0.2-1.5 mm. In some embodiments, the blackened part of the photosensitive microcrystalline glass includes a crystalline phase, and the transparent part of the photosensitive microcrystalline glass includes no crystalline phase. In some embodiments, the crystalline phase of the blackened part of the photosensitive microcrystalline glass is uniformly distributed.

In some embodiments, the photosensitive microcrystalline glass product of the present invention includes one or more blackened parts and one or more transparent parts, wherein the transparent part refers to the part of the photosensitive microcrystalline glass product having an average transmittance ($T_{400\text{-}800\,nm}$) above 85.0% at 400-800 nm wave band range, when the photosensitive microcrystalline glass product is processed to a thickness of 0.2-1.5 mm, and the blackened part refers to the part of the photosensitive microcrystalline glass product having an average transmittance ($T_{400\text{-}800\,nm}$) below 5.0% at 400-800 nm wave band range, when the photosensitive microcrystalline glass product is processed to a thickness of 0.2-1.5 mm. In some embodiments, the blackened part of the photosensitive microcrystalline glass product includes a crystalline phase, and the transparent part of the photosensitive microcrystalline glass product includes no crystalline phase. In some embodiments, the crystalline phase of the blackened part of the photosensitive microcrystalline glass product is uniformly distributed.

In some embodiments, the present invention photosensitive microcrystalline glass or the photosensitive microcrystalline glass product as a whole is a blackened part, wherein the blackened part refers to the part of the photosensitive microcrystalline glass or the photosensitive microcrystalline glass product having an average transmittance ($T_{400\text{-}800\,nm}$) below 5.0% at 400-800 nm wave band range, when the photosensitive microcrystalline glass or the photosensitive microcrystalline glass product is processed to a thickness of 0.2-1.5 mm. In some embodiments, the crystalline phase of the blackened part of the photosensitive microcrystalline glass or the photosensitive microcrystalline glass product is uniformly distributed.

In some embodiments, the photosensitive microcrystalline glass or the photosensitive microcrystalline glass product of the present invention as a whole is a transparent part, wherein the transparent part refers to the part of the photosensitive microcrystalline glass or the photosensitive microcrystalline glass product having an average transmittance ($T_{400\text{-}800\,nm}$) above 85.0% at 400-800 nm wave band range, when the photosensitive microcrystalline glass or the photosensitive microcrystalline glass product is processed to a thickness of 0.2-1.5 mm.

In some embodiments, the blackened part in the photosensitive microcrystalline glass or the photosensitive microcrystalline glass product of the present invention can constitute a pattern of any shape and/or size.

Hereinafter, the ranges of various components (ingredients) of the photosensitive glass material, the photosensitive microcrystalline glass and the photosensitive microcrystalline glass product of the present invention will be described. In the specification, if not otherwise specified, the contents of each component are all expressed in weight percent (wt%) relative to the total amount of the substances of the photosensitive glass material, or the photosensitive microcrystalline glass, or the photosensitive microcrystalline glass product that are converted to the composition of the oxides. Herein, the "converted to the composition of the oxides" means that in a case that oxides, compound salts, hydroxides and the like used as raw materials of the components of the photosensitive glass material, the photosensitive microcrystalline glass, or the photosensitive microcrystalline glass product of the present invention decompose and are converted to oxides when melted, the total amount of the oxides is taken as 100%. In addition, in the specification, where only glass is referred to is the photosensitive glass material before crystallization (i.e., a crystallization process treatment), the photosensitive glass material is referred to as photosensitive microcrystalline glass after crystallization (i.e., a crystallization process treatment), and the photosensitive microcrystalline glass product refers to a product obtained after the photosensitive microcrystalline glass is chemically strengthened.

Unless otherwise indicated in a specific case, the ranges of values set forth herein include upper and lower limits, and "above" and "below" include endpoint values, as well as all integers and fractions within the ranges, and are not limited to the specific values listed while the ranges being defined. The term "about" as used herein refers to formulations, parameters and other quantities and characteristics that are not, and need not be, precise, but can be approximate and/or larger or lower if desired, reflecting tolerances, conversion factors, measurement errors, etc. The term "and/or" as referred to herein is inclusive, e.g., "A and/or B" means only A, or only B, or both A and B.

In some embodiments of the present invention, the crystalline phase (crystals) in the photosensitive microcrystalline glass or the photosensitive microcrystalline glass product includes a lithium silicate crystalline phase, preferably a lithium metasilicate crystalline phase ($Li_2SiO_3$) crystalline phase. In some embodiments, the lithium metasilicate crystalline phase has a higher weight percentage than other crystalline phases. In some embodiments, the crystalline phase in the photosensitive microcrystalline glass or the photosensitive microcrystalline glass product only includes a lithium metasilicate crystalline phase.

In some embodiments, in the blackened part of the photosensitive microcrystalline glass or the photosensitive microcrystalline glass product, the lithium metasilicate crystalline phase has a weight percentage of 5-50%, preferably the lithium metasilicate crystalline phase has a weight percentage of 5-40%, and more preferably the lithium metasilicate crystalline phase has a weight percentage of 10-30%. In some embodiments, in the blackened part of the photosensitive microcrystalline glass or the photosensitive microcrystalline glass product, the lithium metasilicate crystalline phase has a weight percentage of 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%.

$SiO_2$ is the oxide of a glass-forming body, the skeleton forming the glass, and has lower dielectric constant and dielectric loss, and $SiO_2$ is a component of lithium metasilicate of the photosensitive microcrystalline glass. When the content of $SiO_2$ is less than 65%, the hardness and the expansion coefficient of glass decrease, and the dielectric constant and the dielectric loss of glass increase. When the content of $SiO_2$ is higher than 78%, the transmittances of the blackened parts of the photosensitive microcrystalline glass and the photosensitive microcrystalline glass product increase. Therefore, the content range of $SiO_2$ is 65-78%, preferably 68-77%, and more preferably 69.5-75.5%. In some embodiments, about 65%, 65.5%, 66%, 66.5%, 67%, 67.5%, 68%, 68.5%, 69%, 69.5%, 70%, 70.5%, 71%, 71.5%, 72%, 72.5%, 73%, 73.5%, 74%, 74.5%, 75%, 75.5%, 76%, 76.5%, 77%, 77.5%, 78% of $SiO_2$ may be included.

$Li_2O$ is a main ingredient forming crystals of the photosensitive microcrystalline glass and the photosensitive microcrystalline glass product of the present invention, when the content of $Li_2O$ is less than 5%, the content of the crystals of the photosensitive microcrystalline glass or the photosensitive microcrystalline glass product decreases, and the transmittance of the blackened part is higher; when the content of $Li_2O$ is more than 15%, the Young's modulus and the height for a falling ball test of the glass decrease, the refractive index and the dielectric loss of the glass increase, meanwhile the glass of the UV-unexposed part during crystallization of the photosensitive glass material easily precipitates out crystals during the heat treatment, and the transmittances of the transparent parts of the photosensitive microcrystalline glass and the photosensitive microcrystalline glass product decrease. Therefore, the content of $Li_2O$ is limited to 5-15%, preferably 7-13%, and more preferably 8.5-12%. In some embodiments, about 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15% of $Li_2O$ may be included.

The inventor has found through research that in some embodiments, the hardness and the height for a falling ball test of the glass increase with the increased value of $SiO_2/Li_2O$, and the refractive index decreases with the increased value of $SiO_2/Li_2O$. Meanwhile, when $SiO_2/Li_2O$ is lower than 5.5, the transmittances of the transparent parts of the photosensitive microcrystalline glass and the photosensitive microcrystalline glass product decrease, and the transmittances of the blackened parts increase; when $SiO_2/Li_2O$ is above 10.0, the crystal contents of the blackened parts of the photosensitive microcrystalline glass and the photosensitive microcrystalline glass product are lower, and the transmittances of the blackened parts increase. Thus, in some embodiments, with preferably $SiO_2/Li_2O$ being 5.5-10.0, more preferably $SiO_2/Li_2O$ being 6.0-9.0, and further preferably $SiO_2/Li_2O$ being 7.0-8.5, the transparent parts of the photosensitive microcrystalline glass and the photosensitive microcrystalline glass product have higher transmittances at a visible light wave band, and meanwhile the blackened parts have lower transmittances, particularly suitable for light signal channels or light-shielding systems of electronic products. In some embodiments, the value of $SiO_2/Li_2O$ may be 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0.

Alkaline metal oxides $R_2O$ ($R_2O$ is one or two of $Na_2O$ and $K_2O$) can promote precipitation of lithium metasilicate crystals, and improve the transmittances of the blackened parts of the photosensitive microcrystalline glass and the photosensitive microcrystalline glass product. When the content of $R_2O$ is less than 2%, the crystal contents of the photosensitive microcrystalline glass and the photosensitive microcrystalline glass product decrease, and the transmittances of the blackened parts increase, even unable to achieve blackening effects; when the content of $R_2O$ is more than 12%, the Young's modulus and the height for a falling ball test of the glass decrease, and the refractive index, the dielectric constant and the dielectric loss of the glass increase. Thus, the content of $R_2O$ is limited to 2-12%, preferably 3-10%, and more preferably 4-8%. In some embodiments, about 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12% of $R_2O$ may be included.

$Al_2O_3$ can inhibit reduction of the transmittances of the transparent parts of the photosensitive microcrystalline glass and the photosensitive microcrystalline glass product after mask exposure and heat treatment, increase the strength and the hardness of the glass, and enhance the chemical stability of the glass. When the content of $Al_2O_3$ is less than 3%, the hardness and the Young's modulus of the glass decrease, and the linear expansion coefficient increases; when the content of $Al_2O_3$ is more than 12%, the dielectric constant and the dielectric loss of the glass increase, the crystal contents of the blackened parts of the photosensitive microcrystalline glass and the photosensitive microcrystalline glass product decrease, and the transmittances of the blackened parts increase, even unable to achieve blackening effects. Thus, the content of $Al_2O_3$ is 3-12%, preferably 4-10%, and more preferably 5-9%. In some embodiments, about 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12% of $Al_2O_3$ may be included.

In some embodiments, when the summed content $R_2O + Li_2O + Al_2O_3$ of $R_2O$, $Li_2O$ and $Al_2O_3$ is less than 15%, the refractive index, the hardness, and the Young's modulus of the glass decrease; when $R_2O + Li_2O + Al_2O_3$ is more than 30%, the dielectric constant and the dielectric loss of the glass increase. Thus, preferably $R_2O + Li_2O + Al_2O_3$ is 15-30%, more preferably $R_2O + Li_2O + Al_2O_3$ is 17.5-29.5%, further preferably $R_2O + Li_2O + Al_2O_3$ is 18.5-26%, and even further preferably $R_2O + Li_2O + Al_2O_3$ is 20-25%. In some embodiments, $R_2O + Li_2O + Al_2O_3$ is approximately 15%, 15.5%, 16%, 16.5%, 17%, 17.5%, 18%, 18.5%, 19%, 19.5%, 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, 29%, 29.5%, 30%.

The inventor has found through extensive experimental research that in some embodiments, the ratio $(SiO_2 + Al_2O_3)/(Li_2O + Na_2O + K_2O)$ of the summed content $SiO_2 + Al_2O_3$ of $SiO_2$ and $Al_2O_3$ to the summed content $Li_2O + Na_2O + K_2O$ of $Li_2O$, $Na_2O$ and $K_2O$ is controlled to be within a range of 3.0-7.5, the transmittances of the blackened parts of the photosensitive microcrystalline glass and the photosensitive microcrystalline glass product are lower, and the refractive index of the glass is lower, so that the reflectance of the light signal on the glass surface can be reduced, and the incident rate of the light signal can be increased. Thus, preferably $(SiO_2 + Al_2O_3)/(Li_2O + Na_2O + K_2O)$ is 3.0-7.5, more preferably $(SiO_2 + Al_2O_3)/(Li_2O + Na_2O + K_2O)$ is 3.7-6.5, further preferably $(SiO_2 + Al_2O_3)/(Li_2O + Na_2O + K_2O)$ is 4.3-6.0, and even further preferably $(SiO_2 + Al_2O_3)/(Li_2O + Na_2O + K_2O)$ is 4.8-5.8. In some embodiments, the value of $(SiO_2 + Al_2O_3)/(Li_2O + Na_2O + K_2O)$ may be is 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5.

$ZrO_2$ can modulate the precision of a black pattern formed by the blackened part after the glass going through the mask exposure, improve the discrimination of an interface between an exposed part and an unexposed part, and prevent the unexposed part from crystal precipitation near the interface position after going through the heat treatment, so that after going through the heat treatment the unexposed part maintains a high transmittance at a visible light wave band, and meanwhile it is ensured that after the exposed part going through the heat treatment, the blackened part has a lower transmittance. When the content of $ZrO_2$ is less than 1.5%, the expansion coefficient of the glass increases, while the glass going through the heat treatment, and the unexposed part easily precipitates crystals, leading to a reduction of the transmittance of the transparent part. When the content of $ZrO_2$ is higher than 10%, the crystal contents of the photosensitive microcrystalline glass and the photosensitive microcrystalline glass product decrease, and the transmittances of the blackened parts increase, even unable to achieve blackening effects. Thus, the content of $ZrO_2$ is 1.5-10%, preferably 2-8%, and more preferably 3-6.5%. In some embodiments, about 1.5%, 2%, 2.5%, 3%, 3.5%, 4%, 4.5%, 5%, 5.5%, 6%, 6.5%, 7%, 7.5%, 8%, 8.5%, 9%, 9.5%, 10% of $ZrO_2$ may be included.

In some embodiments, the ratio $(K_2O + Na_2O)/ZrO_2$ of the summed content $K_2O + Na_2O$ of $K_2O$ and $Na_2O$ to the content of $ZrO_2$ is controlled to be within a range of 0.5-7.1, the transmittances of the transparent parts of the photosensitive microcrystalline glass and the photosensitive microcrystalline glass product are higher, the hardness and the Young's modulus of the glass are higher, and the dielectric constant of the glass is lower. Thus, preferably $(K_2O + Na_2O)/ZrO_2$ is 0.5-7.1, more preferably $(K_2O + Na_2O)/ZrO_2$ is 0.7-4.5, and further preferably $(K_2O + Na_2O)/ZrO_2$ is 0.8-2.5. In some embodiments, the value of $(K_2O + Na_2O)/ZrO_2$ may be 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.5, 4.6, 4.7, 4.8, 4.9, 5.0, 5.1, 5.2, 5.3, 5.4, 5.5, 6.0, 6.5, 7.0, 7.1.

In some embodiments, controlling the ratio $Li_2O/ZrO_2$ of the content of $Li_2O$ to the content of $ZrO_2$ to be within a range of 1.0-7.5, can allow the glass to have a lower refractive index and dielectric loss, can improve the precision of a pattern formed within the photosensitive microcrystalline glass and the photosensitive microcrystalline glass product after the glass going through the mask exposure and heat treatment, with the transmittances of the transparent parts of the photosensitive microcrystalline glass and the photosensitive microcrystalline glass product being higher, and the transmittances of the blackened parts being lower. Thus, preferably $Li_2O/ZrO_2$ is 1.0-7.5, more preferably $Li_2O/ZrO_2$ is 1.2-5.0, further preferably $Li_2O/ZrO_2$ is 1.4-4.3, and even further preferably $Li_2O/ZrO_2$ is 1.6-3.0. In some embodiments, the value of $Li_2O/ZrO_2$ may be 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.5, 6.0, 6.5, 7.0, 7.5.

In some embodiments, controlling the ratio $(SiO_2 + Li_2O)/ZrO_2$ of the summed content $SiO_2 + Li_2O$ of $SiO_2$ and $Li_2O$ to the content of $ZrO_2$ to be within a range of 8.0-55.0, can increase the hardness and the height for a falling ball test of the glass, reduce the expansion coefficient and the dielectric constant of the glass, improve the precision of a pattern formed within the photosensitive microcrystalline glass and the photosensitive microcrystalline glass product after the glass going through the mask exposure and heat treatment, and increase the heights for a falling ball test of the photosensitive microcrystalline glass and the photosensitive microcrystalline glass product, with the transmittances of the blackened parts of the photosensitive microcrystalline glass and the photosensitive microcrystalline glass product being lower. Thus, preferably $(SiO_2 + Li_2O)/ZrO_2$ is 8.0-55.0, more preferably $(SiO_2 + Li_2O)/ZrO_2$ is 10.0-37.0, further preferably $(SiO_2 + Li_2O)/ZrO_2$ is 12.0-25.0, and even further preferably $(SiO_2 + Li_2O)/ZrO_2$ is 13.0-20.0. In some embodiments, the value of $(SiO_2 + Li_2O)/ZrO_2$ may be 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 25.5, 26.0, 26.5, 27.0, 27.5, 28.0, 28.5, 29.0, 29.5, 30.0, 30.5, 31.0, 31.5, 32.0, 32.5, 33.0, 33.5, 34.0, 34.5, 35.0, 35.5, 36.0, 36.5, 37.0, 38.0, 39.0, 40.0, 41.0, 42.0, 43.0, 44.0, 45.0, 46.0, 47.0, 48.0, 49.0, 50.0, 51.0, 52.0, 53.0, 54.0, 55.0.

Alkaline earth metal oxides MO (MO being one or more of MgO, CaO, SrO, BaO, and ZnO) can improve the dielectric constant of the glass, and improve the transmittances of the blackened parts of the photosensitive microcrystalline glass and the photosensitive microcrystalline glass product; when the content of MO is higher than 5%, the dielectric constant and the dielectric loss of the glass increase, and the Young's modulus and the height for a falling ball test of the glass decrease. Thus, in the present invention, the content of MO is limited to 0-5%, preferably 0-3%, more preferably 0-1%, and further preferably free of MO. In some embodiments, about 0%, more than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5% of MO may be included.

In some embodiments, when $MO/ZrO_2$ is more than 2.5, the dielectric loss of the glass increases, the hardness, the Young's modulus and the height for a falling ball test of the glass decrease, and the transmittances of the blackened parts of the photosensitive microcrystalline glass and the photosensitive microcrystalline glass product increase. Thus, preferably $MO/ZrO_2$ is below 2.5, more preferably $MO/ZrO_2$ is below 1.5, and further preferably $MO/ZrO_2$ is below 0.5. In some embodiments, the value of $MO/ZrO_2$ may be 0, more than 0, 0.01, 0.05, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5.

$CeO_2$ is a photosensitizer providing electrons for a component such as Ag, Sb, Sn, etc., when the content of $CeO_2$ is lower than 0.01%, and fails to provide enough electrons, so that crystal content of the photosensitive microcrystalline glass is too low, the transmittances of the blackened parts of the photosensitive microcrystalline glass and the photosensitive microcrystalline glass product decrease, and the Young's modulus of the photosensitive microcrystalline glass and the photosensitive microcrystalline glass product decrease; when the content of $CeO_2$ is higher than 0.6%, the transmittances of the transparent parts of the photosensitive microcrystalline glass and the photosensitive microcrystalline glass product decrease, and the penetration depths of the photosensitive microcrystalline glass and the photosensitive microcrystalline glass product at an ultraviolet wave band decrease, and the crystal contents within the blackened parts of the photosensitive microcrystalline glass and the photosensitive microcrystalline glass product decrease, and the transmittances increase. Thus, the content of $CeO_2$ is 0.01-0.6%, preferably 0.07-0.4%, and more preferably 0.08-0.3%. In some embodiments, about 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5%, 0.51%, 0.52%, 0.53%, 0.54%, 0.55%, 0.56%, 0.57%, 0.58%, 0.59%, 0.6% of $CeO_2$ may be included.

$Ag_2O$, as a crystal nucleating agent of the photosensitive microcrystalline glass and the photosensitive microcrystalline glass product of the present invention, plays a role to improve blackening effects in the photosensitive microcrystalline glass and the photosensitive microcrystalline glass product. When the content of $Ag_2O$ is lower than 0.01%, the transmittances of the blackened parts of the photosensitive microcrystalline glass and the photosensitive microcrystalline glass product increase, even failing to blacken, and the photosensitive microcrystalline glass and the photosensitive microcrystalline glass product have decreased heights for the falling ball test, increased expansion coefficients, and decreased graphic precision. When the content of $Ag_2O$ is above 0.8%, during the molding or heat treatment of the glass, the transmittance of the transparent part decreases, and because of the content of crystal nuclei being too high, the amount of crystals within the photosensitive microcrystalline glass and the photosensitive microcrystalline glass product increases, leading to too refined grain sizes, so that the crystals of the blackened parts scatter the visible light with attenuation, easily leading to the increased transmittances of the blackened parts, and the glass easily precipitates crystals while molding. Thus, the content of $Ag_2O$ is limited to 0.01-0.8%, preferably 0.1-0.6%, and more preferably 0.2-0.5%. In some embodiments, about 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5%, 0.51%, 0.52%, 0.53%, 0.54%, 0.55%, 0.56%, 0.57%, 0.58%, 0.59%, 0.6%, 0.61%, 0.62%, 0.63%, 0.64%, 0.65%, 0.66%, 0.67%, 0.68%, 0.69%, 0.7%, 0.71%, 0.72%, 0.73%, 0.74%, 0.75%, 0.76%, 0.77%, 0.78%, 0.79%, 0.8% of $Ag_2O$ may be included.

The inventor has found through research that, in some embodiments, by controlling the ratio $Ag_2O/CeO_2$ of the

content of $Ag_2O$ to the content of $CeO_2$ to be within a range of 1.0-10.0, the blackened parts of the photosensitive microcrystalline glass and the photosensitive microcrystalline glass product have larger grain sizes, higher crystal contents, stronger scattering of the light of a visible light wave band, lower transmittances of the blackened parts, and the hardness and the height for a falling ball test of the photosensitive microcrystalline glass and photosensitive microcrystalline glass product increase. Thus, preferably $Ag_2O/CeO_2$ is 1.0-10.0, more preferably $Ag_2O/CeO_2$ is 1.5-6.5, and further preferably $Ag_2O/CeO_2$ is 2.0-4.5. In some embodiments, the value of $Ag_2O/CeO_2$ may be 1.0, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.5, 6.0, 6.5, 7.0, 7.5, 8.0, 8.5, 9.0, 9.5, 10.0.

In some embodiments, controlling the ratio $ZrO_2/(Ag_2O + CeO_2)$ of the content of $ZrO_2$ to the summed content $Ag_2O + CeO_2$ of $Ag_2O$ and $CeO_2$ to be within a range of 2.3-50.0, can optimize the expansion coefficient of the glass, increase the precision of a pattern formed within the photosensitive microcrystalline glass after the glass going through the mask exposure and heat treatment; meanwhile the transmittances of the transparent parts of the photosensitive microcrystalline glass and the photosensitive microcrystalline glass product are higher, and the transmittances of the blackened parts are lower, and the hardness and the falling ball height of the glass and the photosensitive microcrystalline glass product can be increased. Thus, preferably $ZrO_2/(Ag_2O + CeO_2)$ is 2.3-50.0, more preferably $ZrO_2/(Ag_2O + CeO_2)$ is 6.5-35.0, further preferably $ZrO_2/(Ag_2O + CeO_2)$ is 8.5-20.0, and even further preferably $ZrO_2/(Ag_2O + CeO_2)$ is 11.0-18.0. In some embodiments, the value of $ZrO_2/(Ag_2O + CeO_2)$ may be 2.3, 2.5, 3.0, 3.5, 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 26.0, 27.0, 28.0, 29.0, 30.0, 31.0, 32.0, 33.0, 34.0, 35.0, 36.0, 37.0, 38.0, 39.0, 40.0, 41.0, 42.0, 43.0, 44.0, 45.0, 46.0, 47.0, 48.0, 49.0, 50.0.

$Sb_2O_3$ and $SnO_2$ during UV exposure, absorb the electrons released by $Ce^{3+}$ to play a role of storing electrons, provide electrons for $Ag^+$ during the subsequent heat treatment, form Ag colloid nucleation, and promote the photosensitive microcrystalline glass to be blackened. When the content of $Sb_2O_3 + SnO_2$ is lower than 0.05%, it is difficult for the photosensitive microcrystalline glass or the photosensitive microcrystalline glass product to achieve blackening effects; when the content of $Sb_2O_3 + SnO_2$ is higher than 1.2%, the blackened part of the photosensitive microcrystalline glass or the photosensitive microcrystalline glass product has a trend towards an increased transmittance. Thus, the content of $Sb_2O_3 + SnO_2$ is 0.05-1.2%, preferably 0.1-1%, and more preferably 0.2-0.7%. In some embodiments, the content of $Sb_2O_3 + SnO_2$ is approximately 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1.0%, 1.05%, 1.1%, 1.15%, 1.2%.

$SnO_2$ has a better effect to promote the photosensitive microcrystalline glass to be blackened, but in some embodiments, when the content of $SnO_2$ is higher than 0.5%, while the molding or heat treatment of the glass, the transmittance of the transparent part decreases, even devitrification. Thus, the content of $SnO_2$ is limited to 0-0.5%, preferably 0-0.3%, and more preferably 0-0.2%. The content of $Sb_2O_3$ is limited to 0-1%, preferably 0.01-0.7%, and more preferably 0.07-0.5%. In some embodiments, about 0%, more than 0%, 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5% of $SnO_2$ may be included. In some embodiments, about 0%, more than 0%, 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5%, 0.55%, 0.6%, 0.65%, 0.7%, 0.75%, 0.8%, 0.85%, 0.9%, 0.95%, 1% of $Sb_2O_3$ may be included.

The inventor has found through extensive experimental research that, in some embodiments, controlling the ratio $(Sb_2O_3 + SnO_2)/Ag_2O$ of the summed content $Sb_2O_3 + SnO_2$ of $Sb_2O_3$ and $SnO_2$ to the content of $Ag_2O$ to be within a range of 0.1-5.0, can reduce the dielectric loss of the glass, and increase the heights for the falling ball test of the glass and the photosensitive microcrystalline glass product, so that the transmittances of the transparent parts of the photosensitive microcrystalline glass and the photosensitive microcrystalline glass product are higher, and the transmittances of the blackened parts are lower. Thus, preferably $(Sb_2O_3 + SnO_2)/Ag_2O$ is 0.1-5.0, more preferably $(Sb_2O_3 + SnO_2)/Ag_2O$ is 0.5-3.5, and further preferably $(Sb_2O_3 + SnO_2)/Ag_2O$ is 1.0-2.6. In some embodiments, the value of $(Sb_2O_3 + SnO_2)/Ag_2O$ may be 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0.

In some embodiments, controlling the ratio $(Ag_2O + SnO_2 + Sb_2O_3)/CeO_2$ of the summed content $Ag_2O + SnO_2 + Sb_2O_3$ of $Ag_2O$, $SnO_2$ and $Sb_2O_3$ to the content of $CeO_2$ to be within a range of 1.0-30.0, can allow the transmittances of the blackened parts of the photosensitive microcrystalline glass and the photosensitive microcrystalline glass product to be lower, while decreasing the dielectric constant of the glass, to increase the hardness and Young's modulus. Thus, preferably $(Ag_2O + SnO_2 + Sb_2O_3)/CeO_2$ is 1.0-30.0, more preferably $(Ag_2O + SnO_2 + Sb_2O_3)/CeO_2$ is 3.0-20.0, further preferably $(Ag_2O + SnO_2 + Sb_2O_3)/CeO_2$ is 5.0-12.5, and even further preferably $(Ag_2O + SnO_2 + Sb_2O_3)/CeO_2$ is 7.5-10.0. In some embodiments, the value of $(Ag_2O + SnO_2 + Sb_2O_3)/CeO_2$ may be 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 25.5, 26.0, 26.5, 27.0, 27.5, 28.0, 28.5, 29.0, 29.5, 30.0.

In some embodiments, controlling the ratio $(Sb_2O_3 + SnO_2 + CeO_2)/Ag_2O$ of the summed content $Sb_2O_3 + SnO_2 + CeO_2$ of $Sb_2O_3$, $SnO_2$ and $CeO_2$ to the content of $Ag_2O$ to be within a range of 0.1-10.0, can decrease the dielectric loss and the expansion coefficient of the glass, and allow the transmittances of the blackened parts of the photosensitive microcrystalline glass and the photosensitive microcrystalline glass product to be lower. Thus, preferably $(Sb_2O_3 + SnO_2 + CeO_2)/Ag_2O$ is 0.1-10.0, more preferably $(Sb_2O_3 + SnO_2 + CeO_2)/Ag_2O$ is 0.4-5.0, further preferably $(Sb_2O_3 + SnO_2 + CeO_2)/Ag_2O$ is 0.7-3.7, and even further preferably $(Sb_2O_3 + SnO_2 + CeO_2)/Ag_2O$ is 1.5-3.2. In some embodiments, the value of $(Sb_2O_3 + SnO_2 + CeO_2)/Ag_2O$ may be 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.5, 8.0, 8.5, 9.0, 9.5, 10.0.

In some embodiments, when the value of $SnO_2/(CeO_2 + SnO_2)$ is larger than 0.9, during the molding or heat treatment of the glass, the transmittance of the transparent part of the glass sharply decreases, even completely devitrification. Thus, preferably $SnO_2/(CeO_2 + SnO_2)$ is 0-0.9, more preferably $SnO_2/(CeO_2 + SnO_2)$ is 0-0.6, and further preferably $SnO_2/(CeO_2 + SnO_2)$ is 0-0.5. In some embodiments, the value of $SnO_2/(CeO_2 + SnO_2)$ may be 0, more than 0, 0.01, 0.02, 0.03, 0.04, 0.05, 0.07, 0.1, 0.13, 0.15, 0.17, 0.2, 0.23, 0.25, 0.27, 0.3, 0.33, 0.35, 0.37, 0.4, 0.43, 0.45, 0.47, 0.5, 0.53, 0.55, 0.57, 0.6, 0.63, 0.65, 0.67, 0.7, 0.73, 0.75, 0.77, 0.8, 0.83, 0.85, 0.87, 0.9.

$Ln_2O_3$ ($Ln_2O_3$ being one or more of $La_2O_3$, $Gd_2O_3$, and $Y_2O_3$) can adjust the dielectric constant and the dielectric loss of the glass, and can provide electrons for $Ag^+$, to promote the photosensitive microcrystalline glass to be blackened. When $Ln_2O_3$ is higher than 5%, the transmittances of the blackened parts of the photosensitive microcrystalline glass and the photosensitive microcrystalline glass product increase, and the dielectric constant and the dielectric loss of the glass increase. Thus, the content of $Ln_2O_3$ is limited to 0-5%, preferably 0-3%, more preferably 0-1%, in some embodiments, and further preferably free of $Ln_2O_3$. In some embodiments, about 0%, more than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5% of $Ln_2O_3$ may be included.

$Fe_2O_3$ during UV exposure of the glass can absorb UV lights, and can provide electrons for $Ag^+$, to promote the photosensitive microcrystalline glass to be blackened. When the content of $Fe_2O_3$ is higher than 1%, the transparent parts of the photosensitive microcrystalline glass and the photosensitive microcrystalline glass product have decreased transmittances at a visible light wave band range, and the transmittances of the blackened parts increase, and the photosensitive microcrystalline glass and the photosensitive microcrystalline glass product have decreased heights for the falling ball test. Thus, the content of $Fe_2O_3$ is limited to 0-1%, preferably 0-0.5%, more preferably 0-0.2%, in some embodiments, and further preferably free of $Fe_2O_3$. In some embodiments, about 0%, more than 0%, 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5%, 0.55%, 0.6%, 0.65%, 0.7%, 0.75%, 0.8%, 0.85%, 0.9%, 0.95%, 1% of $Fe_2O_3$ may be included.

"Free of', and "0%" recorded herein refer to not intentionally adding the compound, molecule or element or the like as a raw material to the present invention photosensitive glass material, the photosensitive microcrystalline glass or the photosensitive microcrystalline glass product; but as a raw material and/or a device for producing the photosensitive glass material, the photosensitive microcrystalline glass or the photosensitive microcrystalline glass product, there may be some impurities or components unintentionally added, and few or trace may be included in the final photosensitive glass material, the photosensitive microcrystalline glass or the photosensitive microcrystalline glass product, and such circumstances are also within the protection scope of the present invention patent.

Various performance indicators of the photosensitive microcrystalline glass and/or the photosensitive microcrystalline glass product and/or the photosensitive glass material of the present invention are determined by adopting the following methods:

<Light Transmittance>

The light transmittance is determined according the following method: processing a sample to be tested to a certain thickness and parallelly polishing opposite faces, to test according to National Standard "GB/T 7962.12-2010".

<Linear Expansion Coefficient>

The linear expansion coefficient ($\alpha_{20°C-300°C}$) is the data determined at 20°C-300°C according to National Standard "GB/T7962.16-2010". The linear expansion coefficient in the present invention sometimes is abbreviated as the expansion coefficient.

<Dielectric Constant>

The dielectric constant ($\varepsilon_r$) is the data determined according to National Standard "GB/T 7265.1-1987" under the test condition of 1 GHz.

<Dielectric Loss>

The dielectric loss ($\tan\delta$) is the data determined according to National Standard "GB/T 7265.1-1987" under the test condition of 1 GHz.

<Height for a Falling Ball Test>

A sample of $\varphi 20 \times 1$ mm is placed on a glass loading clamp, allowing a steel ball of 32g to fall from a specified height, and a maximum height for the falling ball test at which the sample is able to bear the impact without breakage is the height for the falling ball test. In particular, the test begins with a falling ball test height of 100 mm, by changing the height of 100 mm, 200 mm, 300 mm, 400 mm, 500 mm, 600 mm, 700 mm, 800 mm, 900 mm, 100 mm, 1,000 mm, 1,100 mm, 1,200 mm and more in turn, without breakage. For an example having "a falling ball test height II", the photosensitive microcrystalline glass product is a testing subject. In the Examples, the testing data recorded as 1,000 mm, mean that even allowing a steel ball to fall from a height of 1,000 mm, the photosensitive microcrystalline glass product still can bear the impact without breakage. For an example having "a falling ball test height", the photosensitive glass material is a testing subject. In the present invention, a height for a falling ball test sometimes is abbreviated as a falling ball height.

<Knoop Hardness>

It is denoted by a value of dividing the load (N) at which when a diamond pyramid indenter with an included angle of 172.5° between the opposite faces is pressed and left a pyramid-shaped indent into a testing surface by the surface area (mm$^2$) calculated from the length of the indent. The test is performed with a test load of 100 (N), and a holding time of 15 (sec). In the present invention, the Knoop hardness is sometimes abbreviated as a hardness.

<Young's modulus>

The Young's modulus (E) is determined by testing velocities of a longitudinal wave and a transverse wave with ultrasound, and calculating by the following formula.

$$E = \frac{4G^2 - 3GV_T^2\rho}{G - V_T^2\rho}$$

$$G = V_S^2\rho$$

In the formula: E is Young's modulus, Pa; G is a shear modulus, Pa; $V_T$ is a velocity of a transverse wave, m/s; Vs is a velocity of a longitudinal wave, m/s; and $\rho$ is a density of the glass, g/cm$^3$.

<Refractive Index>

The refractive index ($n_d$) is determined according to the method specified in "GB/T7962.1-2010".
The photosensitive glass material of the present invention has the following performance:

1) In some embodiments, the photosensitive glass material of the present invention has a refractive index ($n_d$) of 1.51-1.55, preferably 1.52-1.54, more preferably 1.53-1.535, and further preferably 1.53112-1.53284.
2) In some embodiments, the photosensitive glass material of the present invention has a Young's modulus (E) of $7,000 \times 10^7$ Pa-$9,500 \times 10^7$ Pa, preferably $7,500 \times 10^7$ Pa-$9,200 \times 10^7$ Pa, more preferably $7,836 \times 10^7$ Pa-$9,014 \times 10^7$ Pa, and further preferably $8,005 \times 10^7$ Pa-$8,488 \times 10^7$ Pa.

3) In some embodiments, the photosensitive glass material of the present invention has a Knoop hardness ($Hk_{0.1}$) above 450 kgf/mm$^2$, preferably 470-600 kgf/mm$^2$, more preferably 480-582 kgf/mm$^2$, and further preferably 492-532 kgf/mm$^2$.

4) In some embodiments, the photosensitive glass material of the present invention has a height I for a falling ball test above 200 mm, preferably above 300 mm, and more preferably above 400 mm.

5) In some embodiments, the photosensitive glass material of the present invention has a dielectric loss ($\tan\delta$) below $11.0 \times 10^{-3}$, preferably $7.0 \times 10^{-3}$-$10.5 \times 10^{-3}$, more preferably $7.2 \times 10^{-3}$-$9.8 \times 10^{-3}$, and further preferably $7.4 \times 10^{-3}$-$9.2 \times 10^{-3}$.

6) In some embodiments, the photosensitive glass material of the present invention has a dielectric constant ($\varepsilon_r$) of 5.5-8.5, preferably 6.0-8.0, more preferably 6.2-7.7, and further preferably 6.3-7.0.

7) In some embodiments, the photosensitive glass material of the present invention has a linear expansion coefficient ($\alpha_{20°C\text{-}300°C}$) below $100 \times 10^{-7}$/°C, preferably $65 \times 10^{-7}$/°C-$100 \times 10^{-7}$/°C, more preferably $71 \times 10^{-7}$/°C-$95 \times 10^{-7}$/°C, and further preferably $75 \times 10^{-7}$/°C-$90 \times 10^{-7}$/°C.

The photosensitive microcrystalline glass of the present invention has the following performance:

1) In some embodiments, the transparent part of the photosensitive microcrystalline glass with a thickness of 0.2-1.5 mm has an average transmittance ($T_{400\text{-}800nm}$) above 85.0%, preferably above 88.0%, more preferably above 90.0%, further preferably above 91.0%, and even further preferably 91.5-95.0% at 400-800 nm wave band range. The above thickness is preferably 0.5-1.5 mm, more preferably 0.8-1.2 mm, and further preferably 0.5 mm, 0.7 mm, 0.8 mm, 0.9 mm, 1.0 mm, 1.1 mm, 1.2 mm.

2) In some embodiments, the blackened part of the photosensitive microcrystalline glass with a thickness of 0.2-1.5 mm has an average transmittance ($T_{400\text{-}800\,nm}$) below 5.0%, preferably below 3.0%, more preferably below 1.5%, further preferably below 1.2%, and even further preferably below 0.5% at 400-800 nm wave band range. The above thickness is preferably 0.5-1.5 mm, more preferably 0.8-1.2 mm, and further preferably 0.5 mm, 0.7 mm, 0.8 mm, 0.9 mm, 1.0 mm, 1.1 mm, 1.2 mm.

3) In some embodiments, the blackened part of the photosensitive microcrystalline glass with a thickness of 0.2-1.5 mm has a transmittance ($T_{870\,nm}$) below 15.0%, preferably 0.1-12.5%, more preferably 0.1-10%, further preferably 0.1-8.0%, and even further preferably 0.1-5.0% at 870 nm. The above thickness is preferably 0.5-1.5 mm, more preferably 0.8-1.2 mm, and further preferably 0.5 mm, 0.7 mm, 0.8 mm, 0.9 mm, 1.0 mm, 1.1 mm, 1.2 mm.

4) In some embodiments, the blackened part of the photosensitive microcrystalline glass with a thickness of 0.2-1.5 mm has a transmittance ($T_{940\,nm}$) below 50.0%, preferably 0.1-35.0%, more preferably 0.3-20.0%, further preferably 0.3-15.0%, and even further preferably 0.3-10.0% at 940 nm. The above thickness is preferably 0.5-1.5 mm, more preferably 0.8-1.2 mm, and further preferably 0.5 mm, 0.7 mm, 0.8 mm, 0.9 mm, 1.0 mm, 1.1 mm, 1.2 mm.

In some embodiments, the transparent part of the photosensitive microcrystalline glass of the present invention does not form crystals, and thus has the same performance as that of the photosensitive glass material described above, e.g., the Young's modulus (E), the Knoop hardness ($Hk_{0.1}$), the height for a falling ball test, the dielectric loss ($\tan\delta$), the dielectric constant ($\varepsilon_r$), the linear expansion coefficient ($\alpha_{20°C\text{-}300°C}$) etc. In particular, in some embodiments, the transparent part of the photosensitive microcrystalline glass of the present invention has a Young's modulus (E) of $7,000 \times 10^7$ Pa-$9,500 \times 10^7$ Pa, preferably $7,500 \times 10^7$ Pa-$9,200 \times 10^7$ Pa, more preferably $7,836 \times 10^7$ Pa-$9,014 \times 10^7$ Pa, and further preferably $8,005 \times 10^7$ Pa-$8,488 \times 10^7$ Pa. In some embodiments, the transparent Part of the photosensitive microcrystalline glass of the present invention has a Knoop hardness ($Hk_{0.1}$) above 450 kgf/mm$^2$, preferably 470-600 kgf/mm$^2$, more preferably 480-582 kgf/mm$^2$, and further preferably 492-532 kgf/mm$^2$. In some embodiments, the transparent part of the photosensitive microcrystalline glass of the present invention has a height for a falling ball test above 200 mm, preferably above 300 mm, more preferably above 400 mm. In some embodiments, the transparent part of the photosensitive microcrystalline glass of the present invention has a dielectric loss ($\tan\delta$) below $11.0 \times 10^{-3}$, preferably $7.0 \times 10^{-3}$-$10.5 \times 10^{-3}$, more preferably $7.2 \times 10^{-3}$-$9.8 \times 10^{-3}$, and further preferably $7.4 \times 10^{-3}$-$9.2 \times 10^{-3}$. In some embodiments, the transparent part of the photosensitive microcrystalline glass of the present invention has a dielectric constant ($\varepsilon_r$) of 5.5-8.5, preferably 6.0-8.0, more preferably 6.2-7.7, and further preferably 6.3-7.0. In some embodiments, the transparent part of the photosensitive microcrystalline glass of the present invention has a linear expansion coefficient ($\alpha_{20°C\text{-}300°C}$) below $100 \times 10^{-7}$/°C, preferably $65 \times 10^{-7}$/°C-$100 \times 10^{-7}$/°C, more preferably $71 \times 10^{-7}$/°C-$95 \times 10^{-7}$/°C, and further preferably $75 \times 10^{-7}$/°C-$90 \times 10^{-7}$/°C.

The photosensitive microcrystalline glass product of the present invention has the following performance:

1) In some embodiments, the transparent part of the photosensitive microcrystalline glass product with a thickness of 0.2-1.5 mm has an average transmittance ($T_{400\text{-}800nm}$) above 85.0%, preferably above 88.0%, more preferably above 90.0%, further preferably above 91.0%, and even further preferably 91.5-95.0% at 400-800 nm wave band range. The above thickness is preferably 0.5-1.5 mm, more preferably 0.8-1.2 mm, and further preferably 0.5 mm, 0.7 mm, 0.8 mm, 0.9 mm, 1.0 mm, 1.1 mm, 1.2 mm.

2) In some embodiments, the blackened part of the photosensitive microcrystalline glass product with a thickness of 0.2-1.5 mm has an average transmittance ($T_{400\text{-}800\,nm}$) below 5.0%, preferably below 3.0%, more preferably below 1.5%, further preferably below 1.2%, and even further preferably below 0.5% at 400-800 nm wave band range. The above thickness is preferably 0.5-1.5 mm, more preferably 0.8-1.2 mm, and further preferably 0.5 mm, 0.7 mm, 0.8 mm, 0.9 mm, 1.0 mm, 1.1 mm, 1.2 mm.

3) In some embodiments, the blackened part of the photosensitive microcrystalline glass product with a thickness of 0.2-1.5 mm has a transmittance ($T_{870\,nm}$) below 15.0%, preferably 0.1-12.5%, more preferably 0.1-10%, further preferably 0.1-8.0%, and even further preferably 0.1-5.0% at 870 nm. The above thickness is preferably 0.5-1.5 mm, more preferably 0.8-1.2 mm, and further preferably 0.5 mm, 0.7 mm, 0.8 mm, 0.9 mm, 1.0 mm, 1.1 mm, 1.2 mm.

4) In some embodiments, the blackened part of the photosensitive microcrystalline glass product with a thickness of 0.2-1.5 mm has a transmittance ($T_{940\,nm}$) below 50.0%, preferably 0.1-35.0%, more preferably 0.3-20.0%, further preferably 0.3-15.0%, and even further preferably 0.3-10.0% at 940 nm. The above thickness is preferably 0.5-1.5 mm, more preferably 0.8-1.2 mm, and further preferably 0.5 mm, 0.7 mm, 0.8 mm, 0.9 mm, 1.0 mm, 1.1 mm, 1.2 mm.

5) In some embodiments, the photosensitive microcrystalline glass product of the present invention has a height II for a falling ball test above 800 mm, preferably above 900 mm, more preferably above 1,000 mm, and further preferably above 1,100 mm.

In some embodiments, the photosensitive glass material/the photosensitive microcrystalline glass/the photosensitive microcrystalline glass product of the present invention has a lower dielectric constant and dielectric loss, and can reduce the transmission loss of the electric signal.

In some embodiments, the photosensitive glass material/the photosensitive microcrystalline glass/the photosensitive microcrystalline glass product of the present invention has a higher Knoop hardness, Young's modulus and height of a falling ball.

In some embodiments, the photosensitive glass material/the photosensitive microcrystalline glass/the photosensitive microcrystalline glass product of the present invention has a lower linear expansion coefficient, to improve the precision of the light signal channel or mask graph.

In some embodiments, the photosensitive glass material/the photosensitive microcrystalline glass/the photosensitive microcrystalline glass product of the present invention has a lower refractive index, such that the reflectance of the light signal on a surface can be reduced, and the incident rate of the light signal can be increased.

The photosensitive microcrystalline glass, the photosensitive microcrystalline glass product, and the photosensitive glass material of the present invention, due to the above-mentioned excellent performance, can be widely made into a glass cover plate or a glass element; meanwhile, the photosensitive microcrystalline glass, the photosensitive microcrystalline glass product, the photosensitive glass material of the present invention, and the glass cover plate or the glass element made therefrom can be applied to produce various apparatuses or devices, and the apparatuses or devices include but are not limited to electronic devices, medical devices, decorations or crafts, such as cell phones, watches, computers, biomedical testing, etc., and be used to produce the local light shielding glass or cover plate glass with patterns of cell phones, smart phones, tablet PCs, laptops, TVs, etc., or used in the light signal channel glass of smart watches, biomedical devices, etc., or used to produce decorations or craft glass with Patterns.

The photosensitive glass material, the photosensitive microcrystalline glass and the photosensitive microcrystalline glass product of the present invention can be produced and prepared by the following method:

A preparation method of the photosensitive glass material includes the following steps: weighing and evenly mixing raw materials according to the ratios of the components, placing the evenly mixed raw materials into a crucible made of platinum or quartz, melting, clarifying, homogenizing at 1,450-1,600°C and then cooling down, pouring the molten glass melt into a mold for molding and passing in the circulating cooling air to ensure that the glass does not precipitate crystals, preferably preheating the mold to 200-500°C, placing the molded glass together with the mold into an annealing furnace for insulation annealing, and then cooling with the furnace after power off to obtain the photosensitive glass material.

A preparation method of the photosensitive microcrystalline glass includes the following steps: forming the photosensitive glass material, treating the photosensitive glass material by a crystallization process, or processing the photosensitive glass material to a glass element of a specific shape and then treating by a crystallization process, to obtain the photosensitive microcrystalline glass of the present invention. The method of processing to a glass element of a specific shape of the present invention includes a method known by a person skilled in the art such as hot-pressing, grinding or polishing processing, etc. The crystallization process treatment of the present invention includes treating the photosensitive glass material by mask exposure, followed by a crystallization heat treatment, so that crystals evenly precipitate at the exposed position of the glass. The mask exposure treatment of the present invention refers to UV exposing a specific position or region of the photosensitive glass material, with a UV wavelength preferably at 313 nm, and can customize specialized photomask patterns according to application needs., with an exposure time preferably of 5-60 min. The crystallization heat treatment of the present invention can be performed in 1-stage, and also can be performed in 2-stage, and preferably the crystallization heat treatment is performed in 2-stage. The 2-stage crystallization heat treatment refers to treating by a nucleation process at a first temperature, and then treating by a crystal growth process at a second temperature higher than the temperature of the nucleation process, preferably the first temperature is 490°C-520°C, preferably treatment time at the first temperature is 1-4 h, preferably the second temperature is 540°C-620°C, and preferably treatment time at the second temperature is 1-8 h.

A preparation method of the photosensitive microcrystalline glass product includes the following steps: treating the photosensitive microcrystalline glass of the present invention by a chemically strengthening process, or processing the photosensitive microcrystalline glass to a photosensitive microcrystalline glass element of a specific shape and then treating by a chemically strengthening process, to obtain the photosensitive microcrystalline glass product of the present invention. The method of processing to a specific shape of the present invention includes a method known by a person skilled in the art such as hot-pressing, grinding or polishing processing, etc.

The chemically strengthening of the present invention is an ion exchange method. During the ion exchange, the smaller metal ions in the photosensitive microcrystalline glass are replaced or "exchanged" by the larger metal ions having the same valence state near the photosensitive microcrystalline glass. By replacing the smaller ions with the larger ions, a compressive stress is built up in the photosensitive microcrystalline glass to form a compressive stress layer.

In some embodiments, the metal ions are monovalent alkaline metal ions (e.g., $Na^+$, $K^+$, $Rb^+$, $Cs^+$, etc.), the ion exchange is performed by immersing the photosensitive microcrystalline glass in a salt bath including at least one melt salts of larger metal ions, and the larger metal ions are used to replace the smaller metal ions in the photosensitive microcrystalline glass. Alternatively, other monovalent metal ions, e.g., $Ag^+$, $Tl^+$, $Cu^+$, etc., also may be used to exchange monovalent ions. One or more ion exchange processes used to chemically strengthen the photosensitive microcrystalline glass may include but are not limited to: immersing it in a single salt bath, or immersing it in multiple salt baths having the same or different composition, and a washing and/or an annealing step may be added between the immersion.

In some embodiments, the photosensitive microcrystalline glass may be ion-exchanged by immersing in a salt bath of melt Na salts (e.g., $NaNO_3$), and/or K salts (e.g., $KNO_3$), and/or mixed Na salts and K salts at a temperature of about 350°C-470°C for 1-36 h, preferably the temperature range being 380°C-460°C, preferably for a time range of 2-24 h.

In some embodiments, the photosensitive glass material of the present invention may produce reinforced glass by the above chemically strengthening process, and then treating by the above crystallization process to obtain the photosensitive microcrystalline glass product. In some embodiments, the photosensitive glass material of the present invention may be processed to a glass element, and then the glass element produces the reinforced glass by the above chemically strengthening process, followed by the above crystallization process treatment to obtain the photosensitive microcrystalline glass product.

Examples

To further clearly explain and illustrate the technical solutions of the present invention, the following non-limiting examples are provided. The examples of the present invention have been through a lot of efforts to ensure the precision of the values (e.g., amounts, etc.), but the presence of some errors and deviations must be considered. The composition itself based on the oxides is given in weight%, and has been normalized to 100%.

<Examples of the Photosensitive Glass Material>

The Examples applied the above preparation method of the photosensitive glass material to obtain the photosensitive glass material having the composition shown in Tables 1-4. Additionally, the properties of various photosensitive glass materials were determined by the testing methods of the present invention, and the testing results were shown in Tables 1-4.

Table 1.

| Examples (wt%) | 1# | 2# | 3# | 4# | 5# | 6# | 7# | 8# | 9# | 10# |
|---|---|---|---|---|---|---|---|---|---|---|
| $SiO_2$ | 72.66 | 67.2 | 69.9 | 65 | 77.19 | 74.37 | 75.58 | 70.1 | 69.2 | 71.5 |
| $Al_2O_3$ | 7.4 | 9.46 | 6.9 | 10 | 3 | 6.7 | 5.5 | 5.9 | 7.7 | 9 |
| $Li_2O$ | 10 | 8.7 | 11.6 | 10.5 | 9.9 | 10.6 | 8.6 | 11.5 | 8.7 | 8.3 |
| $K_2O$ | 4.2 | 3.8 | 3.5 | 5.5 | 2.5 | 2.7 | 4.8 | 4.1 | 5.1 | 2.2 |
| $Na_2O$ | 2.2 | 5.6 | 4.9 | 3.6 | 3 | 2.6 | 1.7 | 3.9 | 4.3 | 5 |
| $ZrO_2$ | 2.6 | 4.5 | 2.2 | 4.6 | 3.5 | 2.5 | 3.1 | 3.2 | 4 | 1.5 |
| $CeO_2$ | 0.1 | 0.07 | 0.12 | 0.06 | 0.14 | 0.07 | 0.08 | 0.14 | 0.1 | 0.09 |
| $Ag_2O$ | 0.2 | 0.42 | 0.38 | 0.32 | 0.34 | 0.27 | 0.33 | 0.45 | 0.47 | 0.41 |
| $Sb_2O_3$ | 0.52 | 0.2 | 0.36 | 0.32 | 0.42 | 0.15 | 0.15 | 0.09 | 0.32 | 0.46 |
| $SnO_2$ | 0.12 | 0.05 | 0.14 | 0.1 | 0.01 | 0.04 | 0.16 | 0.12 | 0.11 | 0.04 |
| $ZnO$ | 0 | 0 | 0 | 0 | 0 | 0 | 0 | 0 | 0 | 1.5 |
| $MgO$ | 0 | 0 | 0 | 0 | 0 | 0 | 0 | 0 | 0 | 0 |
| $CaO$ | 0 | 0 | 0 | 0 | 0 | 0 | 0 | 0 | 0 | 0 |
| $SrO$ | 0 | 0 | 0 | 0 | 0 | 0 | 0 | 0 | 0 | 0 |
| $BaO$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0.5 | 0 | 0 |
| Total | 100 | 100 | 100 | 100 | 100 | 100 | 100 | 100 | 100 | 100 |
| $R_2O$ | 6.4 | 9.4 | 8.4 | 9.1 | 5.5 | 5.3 | 6.5 | 8 | 9.4 | 7.2 |
| $SiO_2/Li_2O$ | 7.27 | 7.72 | 6.03 | 6.19 | 7.8 | 7.02 | 8.79 | 6.1 | 7.95 | 8.61 |
| $Sb_2O_3 + SnO_2$ | 0.64 | 0.25 | 0.5 | 0.42 | 0.43 | 0.19 | 0.31 | 0.21 | 0.43 | 0.5 |
| $(Sb_2O_3 + SnO_2)/Ag_2O$ | 3.2 | 0.6 | 1.32 | 1.31 | 1.26 | 0.7 | 0.94 | 0.47 | 0.91 | 1.22 |
| $Ag_2O/CeO_2$ | 2 | 6 | 3.17 | 5.33 | 2.43 | 3.86 | 4.13 | 3.21 | 4.7 | 4.56 |
| $Li_2O/ZrO_2$ | 3.85 | 1.93 | 5.27 | 2.28 | 2.83 | 4.24 | 2.77 | 3.59 | 2.18 | 5.53 |

(continued)

| Examples (wt%) | 1# | 2# | 3# | 4# | 5# | 6# | 7# | 8# | 9# | 10# |
|---|---|---|---|---|---|---|---|---|---|---|
| $(K_2O + Na_2O)/ZrO_2$ | 2.46 | 2.09 | 3.82 | 1.98 | 1.57 | 2.12 | 2.1 | 2.5 | 2.35 | 4.8 |
| $(SiO_2 + Li_2O)/ZrO_2$ | 31.79 | 16.87 | 37.05 | 16.41 | 24.88 | 33.99 | 27.15 | 25.50 | 19.48 | 53.2 |
| $MO/ZrO_2$ | 0 | 0 | 0 | 0 | 0 | 0 | 0 | 0 | 0 | 1 |
| $ZrO_2/(Ag_2O + CeO_2)$ | 8.67 | 9.18 | 4.4 | 12.11 | 7.29 | 7.35 | 7.56 | 5.42 | 7.02 | 3 |
| $(Ag_2O + SnO_2 + Sb_2O_3)/CeO_2$ | 8.4 | 9.57 | 7.33 | 12.33 | 5.5 | 6.57 | 8 | 4.71 | 9 | 10.11 |
| $(Sb_2O_3 + SnO_2 + CeO_2)/Ag_2O$ | 3.7 | 0.76 | 1.63 | 1.50 | 1.68 | 0.96 | 1.18 | 0.78 | 1.13 | 1.44 |
| $SnO_2/(CeO_2 + SnO_2)$ | 0.55 | 0.42 | 0.54 | 0.63 | 0.07 | 0.36 | 0.67 | 0.46 | 0.52 | 0.31 |
| $R_2O + Li_2O + Al_2O_3$ | 23.8 | 27.56 | 26.9 | 29.6 | 18.4 | 22.6 | 20.6 | 25.4 | 25.8 | 24.5 |
| $(SiO_2 + Al_2O_3)/(Li_2O + Na_2O + K_2O)$ | 4.88 | 4.24 | 3.84 | 3.83 | 5.21 | 5.1 | 5.37 | 3.9 | 4.25 | 5.19 |
| $\varepsilon_r$ | 6.9 | 7.3 | 7.2 | 7.5 | 6.3 | 6.8 | 6.6 | 7.1 | 7.1 | 7.2 |
| $Tan\delta$ ($\times 10^{-3}$) | 8.7 | 9.57 | 9.43 | 10.06 | 7.43 | 8.43 | 7.96 | 9.13 | 9.17 | 9.33 |
| $HK_{0.1}$ ($kgf/mm^2$) | 516 | 494 | 479 | 478 | 528 | 523 | 532 | 479 | 493 | 506 |
| $E$ ($\times 10^7$ Pa) | 8,254 | 8,035 | 7,892 | 7,886 | 8,372 | 8,324 | 8,413 | 7,897 | 8,032 | 8,157 |
| $\alpha_{20°C\text{-}300°C}$ ($\times 10^{-7}/°C$) | 83 | 90 | 95 | 95 | 79 | 81 | 78 | 95 | 90 | 86 |
| Height I for the Falling Ball Test (mm) | 400 | 400 | 300 | 300 | 400 | 400 | 400 | 400 | 300 | 400 |
| $n_d$ | 1.53234 | 1.53277 | 1.53238 | 1.53284 | 1.53037 | 1.53225 | 1.53190 | 1.53216 | 1.53252 | 1.53265 |

Table 2.

| Examples (wt%) | 11# | 12# | 13# | 14# | 15# | 16# | 17# | 18# | 19# | 20# |
|---|---|---|---|---|---|---|---|---|---|---|
| $SiO_2$ | 73.78 | 72.36 | 76.2 | 74.27 | 69.2 | 72.56 | 70.4 | 72.7 | 76.3 | 75.4 |
| $Al_2O_3$ | 6.9 | 5.3 | 3.8 | 4.9 | 5.5 | 4.9 | 7 | 7.8 | 5.4 | 6.4 |
| $Li_2O$ | 7.5 | 8.3 | 9.2 | 9.6 | 10.4 | 7.3 | 11.9 | 10 | 10.5 | 8 |
| $K_2O$ | 1.1 | 3.4 | 2.4 | 3 | 3.8 | 3.3 | 4 | 3.3 | 1.4 | 2.3 |
| $Na_2O$ | 3.4 | 3.7 | 2 | 2.5 | 4.4 | 4.1 | 1.5 | 1.3 | 1.5 | 2.2 |
| $ZrO_2$ | 6.6 | 6.1 | 5.6 | 4.5 | 6.2 | 5.3 | 4.7 | 4.1 | 3.9 | 5.2 |
| $CeO_2$ | 0.07 | 0.13 | 0.13 | 0.1 | 0.09 | 0.1 | 0.12 | 0.11 | 0.13 | 0.11 |
| $Ag_2O$ | 0.42 | 0.44 | 0.3 | 0.46 | 0.24 | 0.37 | 0.23 | 0.22 | 0.32 | 0.23 |
| $Sb_2O_3$ | 0.07 | 0.1 | 0.22 | 0.55 | 0.07 | 0.06 | 0.08 | 0.45 | 0.51 | 0.11 |
| $SnO_2$ | 0.16 | 0.17 | 0.15 | 0.12 | 0.1 | 0.01 | 0.07 | 0.02 | 0.04 | 0.05 |
| $ZnO$ | 0 | 0 | 0 | 0 | 0 | 0 | 0 | 0 | 0 | 0 |
| $MgO$ | 0 | 0 | 0 | 0 | 0 | 0 | 0 | 0 | 0 | 0 |
| $CaO$ | 0 | 0 | 0 | 0 | 0 | 0 | 0 | 0 | 0 | 0 |
| $SrO$ | 0 | 0 | 0 | 0 | 0 | 0 | 0 | 0 | 0 | 0 |
| $BaO$ | 0 | 0 | 0 | 0 | 0 | 0 | 0 | 0 | 0 | 0 |
| $La_2O_3$ | 0 | 0 | 0 | 0 | 0 | 2 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 4.5 | 7.1 | 4.4 | 5.5 | 8.2 | 7.4 | 5.5 | 4.6 | 2.9 | 4.5 |
| $SiO_2/Li_2O$ | 9.84 | 8.72 | 8.28 | 7.74 | 6.65 | 9.94 | 5.92 | 7.27 | 7.27 | 9.43 |
| $Sb_2O_3 + SnO_2$ | 0.23 | 0.27 | 0.37 | 0.67 | 0.17 | 0.07 | 0.15 | 0.47 | 0.55 | 0.16 |
| $(Sb_2O_3 + SnO_2)/Ag_2O$ | 0.55 | 0.61 | 1.23 | 1.46 | 0.71 | 0.19 | 0.65 | 2.14 | 1.72 | 0.7 |
| $Ag_2O/CeO_2$ | 6 | 3.38 | 2.31 | 4.6 | 2.67 | 3.7 | 1.92 | 2 | 2.46 | 2.09 |
| $Li_2O/ZrO_2$ | 1.14 | 1.36 | 1.64 | 2.13 | 1.68 | 1.38 | 2.53 | 2.44 | 2.69 | 1.54 |

| Examples (wt%) | 11# | 12# | 13# | 14# | 15# | 16# | 17# | 18# | 19# | 20# |
|---|---|---|---|---|---|---|---|---|---|---|
| $(K_2O + Na_2O)/ZrO_2$ | 0.68 | 1.16 | 0.79 | 1.22 | 1.32 | 1.4 | 1.17 | 1.12 | 0.74 | 0.87 |
| $(SiO_2 + Li_2O)/ZrO_2$ | 12.32 | 13.22 | 15.25 | 18.64 | 12.84 | 15.07 | 17.51 | 20.17 | 22.26 | 16.04 |
| $MO/ZrO_2$ | 0 | 0 | 0 | 0 | 0 | 0 | 0 | 0 | 0 | 0 |
| $ZrO_2/(Ag_2O + CeO_2)$ | 13.47 | 10.7 | 13.02 | 8.04 | 18.79 | 11.28 | 13.43 | 12.42 | 8.67 | 15.29 |
| $(Ag_2O + SnO_2 + Sb_2O_3)/CeO_2$ | 9.29 | 5.46 | 5.15 | 11.3 | 4.56 | 4.4 | 3.17 | 6.27 | 6.69 | 3.55 |
| $(Sb_2O_3 + SnO_2 + CeO_2)/Ag_2O$ | 0.71 | 0.91 | 1.67 | 1.67 | 1.08 | 0.46 | 1.17 | 2.64 | 2.13 | 1.17 |
| $SnO_2/(CeO_2 + SnO_2)$ | 0.7 | 0.57 | 0.54 | 0.55 | 0.53 | 0.09 | 0.37 | 0.15 | 0.24 | 0.31 |
| $R_2O + Li_2O + Al_2O_3$ | 18.9 | 20.7 | 17.4 | 20 | 24.1 | 19.6 | 24.4 | 22.4 | 18.8 | 18.9 |
| $(SiO_2 + Al_2O_3)/(Li_2O + Na_2O + K_2O)$ | 6.72 | 5.04 | 5.88 | 5.24 | 4.02 | 5.27 | 4.45 | 5.51 | 6.1 | 6.54 |
| $\varepsilon_r$ | 6.4 | 6.5 | 6.2 | 6.5 | 6.9 | 6.7 | 7.0 | 6.7 | 6.4 | 6.4 |
| $Tan\delta\ (\times 10^{-3})$ | 7.56 | 7.94 | 7.2 | 7.78 | 8.78 | 8.19 | 8.86 | 8.36 | 7.53 | 7.55 |
| $HK_{0.1}\ (kgf/mm^2)$ | 582 | 523 | 553 | 531 | 485 | 507 | 500 | 540 | 559 | 577 |
| $E\ (\times 10^7\ Pa)$ | 8,892 | 8,322 | 8,611 | 8,396 | 7,951 | 8,166 | 8,094 | 8,488 | 8,677 | 8,846 |
| $\alpha_{20°C-300°C}(\times 10^{-7}/°C)$ | 66 | 81 | 71 | 78 | 93 | 86 | 88 | 75 | 69 | 63 |
| Height I for the Falling Ball Test (mm) | 400 | 400 | 400 | 400 | 300 | 400 | 400 | 400 | 400 | 400 |
| $n_d$ | 1.532 30 | 1.531 91 | 1.531 12 | 1.531 73 | 1.532 07 | 1.531 76 | 1.532 39 | 1.532 48 | 1.531 86 | 1.532 16 |

Table 3.

| Examples (wt%) | 21# | 22# | 23# | 24# | 25# | 26# | 27# | 28# | 29# | 30# |
|---|---|---|---|---|---|---|---|---|---|---|
| $SiO_2$ | 72.76 | 72 | 72.5 | 69.8 | 69.4 | 73.5 | 71 | 71.5 | 67.5 | 78 |
| $Al_2O_3$ | 5.7 | 6 | 6.1 | 6.5 | 8.4 | 7.6 | 7.9 | 9.5 | 6 | 3 |
| $Li_2O$ | 9.2 | 10.2 | 9.8 | 10 | 12 | 9.2 | 11.2 | 9.8 | 11.6 | 11.8 |
| $K_2O$ | 4.3 | 3 | 3.1 | 5.2 | 2.1 | 2.5 | 3.7 | 1.8 | 3.7 | 3 |
| $Na_2O$ | 1.9 | 2.5 | 2.8 | 5.4 | 3.3 | 1.7 | 4 | 3.7 | 4.1 | 1 |
| $ZrO_2$ | 5.5 | 5.5 | 4.8 | 2.4 | 3.7 | 4.6 | 1.6 | 2.9 | 6.5 | 2.1 |
| $CeO_2$ | 0.1 | 0.1 | 0.15 | 0.14 | 0.09 | 0.1 | 0.07 | 0.11 | 0.12 | 0.14 |
| $Ag_2O$ | 0.29 | 0.33 | 0.22 | 0.21 | 0.5 | 0.31 | 0.3 | 0.4 | 0.32 | 0.4 |
| $Sb_2O_3$ | 0.07 | 0.23 | 0.42 | 0.3 | 0.43 | 0.29 | 0.22 | 0.21 | 0.14 | 0.46 |
| $SnO_2$ | 0.18 | 0.14 | 0.11 | 0.05 | 0.08 | 0.2 | 0.01 | 0.08 | 0.02 | 0.1 |
| $ZnO$ | 0 | 0 | 0 | 0 | 0 | 0 | 0 | 0 | 0 | 0 |
| $MgO$ | 0 | 0 | 0 | 0 | 0 | 0 | 0 | 0 | 0 | 0 |
| $CaO$ | 0 | 0 | 0 | 0 | 0 | 0 | 0 | 0 | 0 | 0 |
| $SrO$ | 0 | 0 | 0 | 0 | 0 | 0 | 0 | 0 | 0 | 0 |
| $BaO$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 6.2 | 5.5 | 5.9 | 10.6 | 5.4 | 4.2 | 7.7 | 5.5 | 7.8 | 4 |
| $SiO_2/Li_2O$ | 7.91 | 7.06 | 7.40 | 6.98 | 5.78 | 7.99 | 6.34 | 7.30 | 5.82 | 6.61 |
| $Sb_2O_3 + SnO_2$ | 0.25 | 0.37 | 0.53 | 0.35 | 0.51 | 0.49 | 0.23 | 0.29 | 0.16 | 0.56 |
| $(Sb_2O_3 + SnO_2)/Ag_2O$ | 0.86 | 1.12 | 2.41 | 1.67 | 1.02 | 1.58 | 0.77 | 0.73 | 0.5 | 1.4 |
| $Ag_2O/CeO_2$ | 2.9 | 3.3 | 1.47 | 1.5 | 5.56 | 3.1 | 4.29 | 3.64 | 2.67 | 2.86 |
| $Li_2O/ZrO_2$ | 1.67 | 1.85 | 2.04 | 4.17 | 3.24 | 2 | 7 | 3.38 | 1.78 | 5.62 |

(continued)

| Examples (wt%) | 21# | 22# | 23# | 24# | 25# | 26# | 27# | 28# | 29# | 30# |
|---|---|---|---|---|---|---|---|---|---|---|
| $(K_2O + Na_2O)/ZrO_2$ | 1.13 | 1 | 1.23 | 4.42 | 1.46 | 0.91 | 4.81 | 1.9 | 1.2 | 1.9 |
| $(SiO_2 + Li_2O)/ZrO_2$ | 14.9 | 14.95 | 17.15 | 33.25 | 22 | 17.98 | 51.38 | 28.03 | 12.17 | 42.76 |
| $MO/ZrO_2$ | 0 | 0 | 0 | 0 | 0 | 0 | 0 | 0 | 0 | 0 |
| $ZrO_2/(Ag_2O + CeO_2)$ | 14.1 | 12.79 | 12.97 | 6.86 | 6.27 | 11.22 | 4.32 | 5.69 | 14.77 | 3.89 |
| $(Ag_2O + SnO_2 + Sb_2O_3)/CeO_2$ | 5.4 | 7 | 5 | 4 | 11.22 | 8 | 7.57 | 6.27 | 4 | 6.86 |
| $(Sb_2O_3 + SnO_2 + CeO_2)/Ag_2O$ | 1.21 | 1.42 | 3.09 | 2.33 | 1.2 | 1.9 | 1 | 1 | 0.88 | 1.75 |
| $SnO_2/(CeO_2 + SnO_2)$ | 0.64 | 0.58 | 0.42 | 0.26 | 0.47 | 0.67 | 0.13 | 0.42 | 0.14 | 0.42 |
| $R_2O + Li_2O + Al_2O_3$ | 21.1 | 21.7 | 21.8 | 27.1 | 25.8 | 21 | 26.8 | 24.8 | 25.4 | 18.8 |
| $(SiO_2 + Al_2O_3)/(Li_2O + Na_2O + K_2O)$ | 5.09 | 4.97 | 5.01 | 3.7 | 4.47 | 6.05 | 4.17 | 5.29 | 3.79 | 5.13 |
| $\varepsilon_r$ | 6.6 | 6.7 | 6.7 | 7.3 | 7.1 | 6.6 | 7.2 | 7.0 | 7.1 | 6.4 |
| $Tan\delta$ ($\times 10^{-3}$) | 8.07 | 8.24 | 8.26 | 9.5 | 9.17 | 8.06 | 9.41 | 8.94 | 9.08 | 7.54 |
| $HK_{0.1}$ (kgf/mm²) | 523 | 519 | 520 | 473 | 501 | 558 | 490 | 531 | 477 | 524 |
| $E$ ($\times 10^7$ Pa) | 8,326 | 8,284 | 8,289 | 7,836 | 8,109 | 8,660 | 8,005 | 8,396 | 7,871 | 8,334 |
| $\alpha_{20°C\text{-}300°C}$ ($\times 10^{-7}/°C$) | 81 | 82 | 82 | 97 | 88 | 69 | 91 | 78 | 96 | 80 |
| Height I for the Falling Ball Test (mm) | 400 | 400 | 400 | 300 | 300 | 400 | 400 | 400 | 300 | 400 |
| $n_d$ | 1.532 03 | 1.532 16 | 1.532 16 | 1.532 31 | 1.532 61 | 1.532 44 | 1.532 52 | 1.532 71 | 1.532 23 | 1.530 34 |

Table 4.

| Examples (wt%) | 31# | 32# | 33# | 34# | 35# | 36# | 37# | 38# | 39# | 40# |
|---|---|---|---|---|---|---|---|---|---|---|
| $SiO_2$ | 71.1 | 70.9 | 73.5 | 72.3 | 74.2 | 72.5 | 72.1 | 72.9 | 70.1 | 70.5 |
| $Al_2O_3$ | 8.9 | 8.4 | 3.5 | 7.6 | 5.9 | 6 | 6 | 4.8 | 9.7 | 8 |
| $Li_2O$ | 8.5 | 10.2 | 11 | 9.6 | 9.8 | 10.4 | 10.7 | 10.8 | 7.4 | 11.6 |
| $K_2O$ | 1.8 | 3.2 | 3.8 | 2.3 | 3.2 | 3.4 | 4.5 | 3.7 | 4.6 | 1.1 |
| $Na_2O$ | 5.5 | 1.9 | 3.2 | 1.1 | 2.9 | 2.1 | 2.8 | 3.9 | 1.3 | 2.5 |
| $ZrO_2$ | 2 | 4.8 | 4.3 | 2 | 3.4 | 5.1 | 3 | 3.4 | 6.1 | 5.4 |
| $CeO_2$ | 0.15 | 0.12 | 0.09 | 0.15 | 0.09 | 0.1 | 0.11 | 0.1 | 0.13 | 0.13 |
| $Ag_2O$ | 0.36 | 0.24 | 0.23 | 0.34 | 0.29 | 0.22 | 0.3 | 0.25 | 0.24 | 0.3 |
| $Sb_2O_3$ | 0.5 | 0.21 | 0.31 | 0.43 | 0.15 | 0.08 | 0.39 | 0.14 | 0.35 | 0.44 |
| $SnO_2$ | 0.09 | 0.03 | 0.07 | 0.18 | 0.07 | 0.1 | 0.1 | 0.01 | 0.08 | 0.03 |
| $ZnO$ | 1.1 | 0 | 0 | 4 | 0 | 0 | 0 | 0 | 0 | 0 |
| $MgO$ | 0 | 0 | 0 | 0 | 0 | 0 | 0 | 0 | 0 | 0 |
| $CaO$ | 0 | 0 | 0 | 0 | 0 | 0 | 0 | 0 | 0 | 0 |
| $SrO$ | 0 | 0 | 0 | 0 | 0 | 0 | 0 | 0 | 0 | 0 |
| $BaO$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 7.3 | 5.1 | 7 | 3.4 | 6.1 | 5.5 | 7.3 | 7.6 | 5.9 | 3.6 |
| $SiO_2/Li_2O$ | 8.36 | 6.95 | 6.68 | 7.53 | 7.57 | 6.97 | 6.74 | 6.75 | 9.47 | 6.08 |
| $Sb_2O_3 + SnO_2$ | 0.59 | 0.24 | 0.38 | 0.61 | 0.22 | 0.18 | 0.49 | 0.15 | 0.43 | 0.47 |
| $(Sb_2O_3 + SnO_2)/Ag_2O$ | 1.64 | 1 | 1.65 | 1.79 | 0.76 | 0.82 | 1.63 | 0.60 | 1.79 | 1.57 |
| $Ag_2O/CeO_2$ | 2.4 | 2 | 2.56 | 2.27 | 3.22 | 2.2 | 2.73 | 2.5 | 1.85 | 2.31 |
| $Li_2O/ZrO_2$ | 4.25 | 2.13 | 2.56 | 4.8 | 2.88 | 2.04 | 3.57 | 3.18 | 1.21 | 2.15 |

(continued)

| Examples (wt%) | 31# | 32# | 33# | 34# | 35# | 36# | 37# | 38# | 39# | 40# |
|---|---|---|---|---|---|---|---|---|---|---|
| $(K_2O + Na_2O)/ZrO_2$ | 3.65 | 1.06 | 1.63 | 1.7 | 1.79 | 1.08 | 2.43 | 2.24 | 0.97 | 0.67 |
| $(SiO_2 + Li_2O)/ZrO_2$ | 39.8 | 16.9 | 19.65 | 40.95 | 24.71 | 16.25 | 27.6 | 24.62 | 12.7 | 15.2 |
| $MO/ZrO_2$ | 0.55 | 0 | 0 | 2 | 0 | 0 | 0 | 0 | 0 | 0 |
| $ZrO_2/(Ag_2O + CeO_2)$ | 3.92 | 13.33 | 13.44 | 4.08 | 8.95 | 15.94 | 7.32 | 9.71 | 16.49 | 12.56 |
| $(Ag_2O + SnO_2 + Sb_2O_3)/CeO_2$ | 6.33 | 4 | 6.78 | 6.33 | 5.67 | 4 | 7.18 | 4 | 5.15 | 5.92 |
| $(Sb_2O_3 + SnO_2 + CeO_2)/Ag_2O$ | 2.06 | 1.5 | 2.04 | 2.24 | 1.07 | 1.27 | 2 | 1 | 2.33 | 2 |
| $SnO_2/(CeO_2 + SnO_2)$ | 0.38 | 0.2 | 0.44 | 0.55 | 0.44 | 0.5 | 0.48 | 0.09 | 0.38 | 0.19 |
| $R_2O + Li_2O + Al_2O_3$ | 24.7 | 23.7 | 21.5 | 20.6 | 21.8 | 21.9 | 24 | 23.2 | 23 | 23.2 |
| $(SiO_2 + Al_2O_3)/(Li_2O + Na_2O + K_2O)$ | 5.06 | 5.18 | 4.28 | 6.15 | 5.04 | 4.94 | 4.34 | 4.22 | 6 | 5.16 |
| $\varepsilon_r$ | 7.2 | 6.9 | 6.7 | 6.7 | 6.7 | 6.7 | 6.9 | 6.8 | 6.8 | 6.8 |
| $Tan\delta$ ($\times 10^{-3}$) | 9.39 | 8.7 | 8.18 | 8.19 | 8.25 | 8.28 | 8.76 | 8.56 | 8.53 | 8.56 |
| $HK_{0.1}$ ($kgf/mm^2$) | 502 | 526 | 494 | 555 | 521 | 517 | 496 | 492 | 554 | 526 |
| $E$ ($\times 10^7$ Pa) | 8,118 | 8,348 | 8,038 | 8,629 | 8,299 | 8,264 | 8,060 | 8,021 | 8,624 | 8,351 |
| $\alpha_{20°C\text{-}300°C}$ ($\times 10^{-7}$/°C) | 88 | 80 | 90 | 70 | 81 | 83 | 90 | 91 | 71 | 80 |
| Height I for the Falling Ball Test (mm) | 400 | 400 | 400 | 400 | 400 | 400 | 400 | 400 | 400 | 400 |
| $n_d$ | 1.532 65 | 1.532 59 | 1.530 98 | 1.532 38 | 1.532 07 | 1.532 12 | 1.532 13 | 1.531 72 | 1.532 74 | 1.532 54 |

<Examples of the Photosensitive Microcrystalline Glass>

The Examples applied the above preparation method of the photosensitive microcrystalline glass to obtain the photosensitive microcrystalline glass having the composition shown in Tables 5-8. Additionally, the properties of various photosensitive microcrystalline glass were determined by the testing methods of the present invention, and the testing results were shown in Tables 5-8, and in the following Examples the transmittances of the photosensitive microcrystalline glass were determined by using samples with a thickness of 1 mm.

Table 5.

| Examples (wt%) | 1# | 2# | 3# | 4# | 5# | 6# | 7# | 8# | 9# | 10# |
|---|---|---|---|---|---|---|---|---|---|---|
| $SiO_2$ | 72.66 | 67.2 | 69.9 | 65 | 77.19 | 74.37 | 75.58 | 70.1 | 69.2 | 71.5 |
| $Al_2O_3$ | 7.4 | 9.46 | 6.9 | 10 | 3 | 6.7 | 5.5 | 5.9 | 7.7 | 9 |
| $Li_2O$ | 10 | 8.7 | 11.6 | 10.5 | 9.9 | 10.6 | 8.6 | 11.5 | 8.7 | 8.3 |
| $K_2O$ | 4.2 | 3.8 | 3.5 | 5.5 | 2.5 | 2.7 | 4.8 | 4.1 | 5.1 | 2.2 |
| $Na_2O$ | 2.2 | 5.6 | 4.9 | 3.6 | 3 | 2.6 | 1.7 | 3.9 | 4.3 | 5 |
| $ZrO_2$ | 2.6 | 4.5 | 2.2 | 4.6 | 3.5 | 2.5 | 3.1 | 3.2 | 4 | 1.5 |
| $CeO_2$ | 0.1 | 0.07 | 0.12 | 0.06 | 0.14 | 0.07 | 0.08 | 0.14 | 0.1 | 0.09 |
| $Ag_2O$ | 0.2 | 0.42 | 0.38 | 0.32 | 0.34 | 0.27 | 0.33 | 0.45 | 0.47 | 0.41 |
| $Sb_2O_3$ | 0.52 | 0.2 | 0.36 | 0.32 | 0.42 | 0.15 | 0.15 | 0.09 | 0.32 | 0.46 |
| $SnO_2$ | 0.12 | 0.05 | 0.14 | 0.1 | 0.01 | 0.04 | 0.16 | 0.12 | 0.11 | 0.04 |
| ZnO | 0 | 0 | 0 | 0 | 0 | 0 | 0 | 0 | 0 | 1.5 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0.5 | 0 | 0 |
| Total | 100 | 100 | 100 | 100 | 100 | 100 | 100 | 100 | 100 | 100 |
| $R_2O$ | 6.4 | 9.4 | 8.4 | 9.1 | 5.5 | 5.3 | 6.5 | 8 | 9.4 | 7.2 |
| $SiO_2/Li_2O$ | 7.27 | 7.72 | 6.03 | 6.19 | 7.8 | 7.02 | 8.79 | 6.1 | 7.95 | 8.61 |
| $Sb_2O_3 + SnO_2$ | 0.64 | 0.25 | 0.5 | 0.42 | 0.43 | 0.19 | 0.31 | 0.21 | 0.43 | 0.5 |
| $(Sb_2O_3 + SnO_2)/Ag_2O$ | 3.2 | 0.6 | 1.32 | 1.31 | 1.26 | 0.7 | 0.94 | 0.47 | 0.91 | 1.22 |
| $Ag_2O/CeO_2$ | 2 | 6 | 3.17 | 5.33 | 2.43 | 3.86 | 4.13 | 3.21 | 4.7 | 4.56 |
| $Li_2O/ZrO_2$ | 3.85 | 1.93 | 5.27 | 2.28 | 2.83 | 4.24 | 2.77 | 3.59 | 2.18 | 5.53 |
| $(K_2O + Na_2O)/ZrO_2$ | 2.46 | 2.09 | 3.82 | 1.98 | 1.57 | 2.12 | 2.1 | 2.5 | 2.35 | 4.8 |
| $(SiO_2 + Li_2O)/ZrO_2$ | 31.79 | 16.87 | 37.05 | 16.41 | 24.88 | 33.99 | 27.15 | 25.50 | 19.48 | 53.2 |
| $MO/ZrO_2$ | 0 | 0 | 0 | 0 | 0 | 0 | 0 | 0 | 0 | 1 |
| $ZrO_2/(Ag_2O + CeO_2)$ | 8.67 | 9.18 | 4.4 | 12.11 | 7.29 | 7.35 | 7.56 | 5.42 | 7.02 | 3 |

(continued)

| Examples (wt%) | 1# | 2# | 3# | 4# | 5# | 6# | 7# | 8# | 9# | 10# |
|---|---|---|---|---|---|---|---|---|---|---|
| $(Ag_2O + SnO_2 + Sb_2O_3)/CeO_2$ | 8.4 | 9.57 | 7.33 | 12.33 | 5.5 | 6.57 | 8 | 4.71 | 9 | 10.11 |
| $(Sb_2O_3 + SnO_2 + CeO_2)/Ag_2O$ | 3.7 | 0.76 | 1.63 | 1.50 | 1.68 | 0.96 | 1.18 | 0.78 | 1.13 | 1.44 |
| $SnO_2/(CeO_2 + SnO_2)$ | 0.55 | 0.42 | 0.54 | 0.63 | 0.07 | 0.36 | 0.67 | 0.46 | 0.52 | 0.31 |
| $R_2O + Li_2O + Al_2O_3$ | 23.8 | 27.56 | 26.9 | 29.6 | 18.4 | 22.6 | 20.6 | 25.4 | 25.8 | 24.5 |
| $(SiO_2 + Al_2O_3)/(Li_2O + Na_2O + K_2O)$ | 4.88 | 4.24 | 3.84 | 3.83 | 5.21 | 5.1 | 5.37 | 3.9 | 4.25 | 5.19 |
| Transparent Part $T_{400-800\ nm}$ (%) | 91.8 | 92.0 | 91.6 | 91.8 | 92.0 | 92.0 | 90.7 | 91.6 | 91.8 | 92.0 |
| Blackened Part $T_{940\ nm}$ (%) | 0.3 | 21.7 | 3.3 | 2.8 | 4.0 | 17.1 | 10.1 | 2.5 | 11.1 | 4.8 |
| Blackened Part $T_{870\ nm}$ (%) | 0.3 | 7.6 | 1.2 | 1.0 | 1.4 | 6.0 | 3.5 | 0.9 | 3.9 | 1.7 |
| Blackened Part $T_{400-800\ nm}$ (%) | 0 | 0.7 | 0.3 | 0.3 | 0.3 | 0.6 | 0.5 | 0.3 | 0.5 | 0.3 |

Table 6.

| Examples (wt%) | 11# | 12# | 13# | 14# | 15# | 16# | 17# | 18# | 19# | 20# |
|---|---|---|---|---|---|---|---|---|---|---|
| $SiO_2$ | 73.78 | 72.36 | 76.2 | 74.27 | 69.2 | 72.56 | 70.4 | 72.7 | 76.3 | 75.4 |
| $Al_2O_3$ | 6.9 | 5.3 | 3.8 | 4.9 | 5.5 | 4.9 | 7 | 7.8 | 5.4 | 6.4 |
| $Li_2O$ | 7.5 | 8.3 | 9.2 | 9.6 | 10.4 | 7.3 | 11.9 | 10 | 10.5 | 8 |
| $K_2O$ | 1.1 | 3.4 | 2.4 | 3 | 3.8 | 3.3 | 4 | 3.3 | 1.4 | 2.3 |
| $Na_2O$ | 3.4 | 3.7 | 2 | 2.5 | 4.4 | 4.1 | 1.5 | 1.3 | 1.5 | 2.2 |
| $ZrO_2$ | 6.6 | 6.1 | 5.6 | 4.5 | 6.2 | 5.3 | 4.7 | 4.1 | 3.9 | 5.2 |
| $CeO_2$ | 0.07 | 0.13 | 0.13 | 0.1 | 0.09 | 0.1 | 0.12 | 0.11 | 0.13 | 0.11 |
| $Ag_2O$ | 0.42 | 0.44 | 0.3 | 0.46 | 0.24 | 0.37 | 0.23 | 0.22 | 0.32 | 0.23 |
| $Sb_2O_3$ | 0.07 | 0.1 | 0.22 | 0.55 | 0.07 | 0.06 | 0.08 | 0.45 | 0.51 | 0.11 |
| $SnO_2$ | 0.16 | 0.17 | 0.15 | 0.12 | 0.1 | 0.01 | 0.07 | 0.02 | 0.04 | 0.05 |
| ZnO | 0 | 0 | 0 | 0 | 0 | 0 | 0 | 0 | 0 | 0 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 2 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |

(continued)

| Examples (wt%) | 11# | 12# | 13# | 14# | 15# | 16# | 17# | 18# | 19# | 20# |
|---|---|---|---|---|---|---|---|---|---|---|
| $R_2O$ | 4.5 | 7.1 | 4.4 | 5.5 | 8.2 | 7.4 | 5.5 | 4.6 | 2.9 | 4.5 |
| $SiO_2/Li_2O$ | 9.84 | 8.72 | 8.28 | 7.74 | 6.65 | 9.94 | 5.92 | 7.27 | 7.27 | 9.43 |
| $Sb_2O_3 + SnO_2$ | 0.23 | 0.27 | 0.37 | 0.67 | 0.17 | 0.07 | 0.15 | 0.47 | 0.55 | 0.16 |
| $(Sb_2O_3 + SnO_2)/Ag_2O$ | 0.55 | 0.61 | 1.23 | 1.46 | 0.71 | 0.19 | 0.65 | 2.14 | 1.72 | 0.7 |
| $Ag_2O/CeO_2$ | 6 | 3.38 | 2.31 | 4.6 | 2.67 | 3.7 | 1.92 | 2 | 2.46 | 2.09 |
| $Li_2O/ZrO_2$ | 1.14 | 1.36 | 1.64 | 2.13 | 1.68 | 1.38 | 2.53 | 2.44 | 2.69 | 1.54 |
| $(K_2O + Na_2O)/ZrO_2$ | 0.68 | 1.16 | 0.79 | 1.22 | 1.32 | 1.4 | 1.17 | 1.12 | 0.74 | 0.87 |
| $(SiO_2 + Li_2O)/ZrO_2$ | 12.32 | 13.22 | 15.25 | 18.64 | 12.84 | 15.07 | 17.51 | 20.17 | 22.26 | 16.04 |
| $MO/ZrO_2$ | 0 | 0 | 0 | 0 | 0 | 0 | 0 | 0 | 0 | 0 |
| $ZrO_2/(Ag_2O + CeO_2)$ | 13.47 | 10.7 | 13.02 | 8.04 | 18.79 | 11.28 | 13.43 | 12.42 | 8.67 | 15.29 |
| $(Ag_2O + SnO_2 + Sb_2O_3)/CeO_2$ | 9.29 | 5.46 | 5.15 | 11.3 | 4.56 | 4.4 | 3.17 | 6.27 | 6.69 | 3.55 |
| $(Sb_2O_3 + SnO_2 + CeO_2)/Ag_2O$ | 0.71 | 0.91 | 1.67 | 1.67 | 1.08 | 0.46 | 1.17 | 2.64 | 2.13 | 1.17 |
| $SnO_2/(CeO_2 + SnO_2)$ | 0.7 | 0.57 | 0.54 | 0.55 | 0.53 | 0.09 | 0.37 | 0.15 | 0.24 | 0.31 |
| $R_2O + Li_2O + Al_2O_3$ | 18.9 | 20.7 | 17.4 | 20 | 24.1 | 19.6 | 24.4 | 22.4 | 18.8 | 18.9 |
| $(SiO_2 + Al_2O_3)/(Li_2O + Na_2O + K_2O)$ | 6.72 | 5.04 | 5.88 | 5.24 | 4.02 | 5.27 | 4.45 | 5.51 | 6.1 | 6.54 |
| Transparent Part $T_{400-800\ nm}$ (%) | 90.7 | 90.7 | 91.5 | 90.7 | 91.8 | 92.0 | 92.0 | 92.0 | 92.0 | 92.0 |
| Blackened Part $T_{940\ nm}$ (%) | 20.7 | 18.8 | 4.7 | 1.0 | 19.7 | 35.9 | 18.3 | 0.4 | 0.4 | 12.8 |
| Blackened Part $T_{870\ nm}$ (%) | 7.3 | 6.6 | 1.7 | 0.4 | 6.9 | 12.6 | 6.4 | 0.1 | 0.1 | 4.5 |
| Blackened Part $T_{400-800\ nm}$ (%) | 0.7 | 0.6 | 0.3 | 0.2 | 0.6 | 1.2 | 0.6 | 0 | 0 | 0.2 |

Table 7.

| Examples (wt%) | 21# | 22# | 23# | 24# | 25# | 26# | 27# | 28# | 29# | 30# |
|---|---|---|---|---|---|---|---|---|---|---|
| $SiO_2$ | 72.76 | 72 | 72.5 | 69.8 | 69.4 | 73.5 | 71 | 71.5 | 67.5 | 78 |
| $Al_2O_3$ | 5.7 | 6 | 6.1 | 6.5 | 8.4 | 7.6 | 7.9 | 9.5 | 6 | 3 |
| $Li_2O$ | 9.2 | 10.2 | 9.8 | 10 | 12 | 9.2 | 11.2 | 9.8 | 11.6 | 11.8 |
| $K_2O$ | 4.3 | 3 | 3.1 | 5.2 | 2.1 | 2.5 | 3.7 | 1.8 | 3.7 | 3 |
| $Na_2O$ | 1.9 | 2.5 | 2.8 | 5.4 | 3.3 | 1.7 | 4 | 3.7 | 4.1 | 1 |
| $ZrO_2$ | 5.5 | 5.5 | 4.8 | 2.4 | 3.7 | 4.6 | 1.6 | 2.9 | 6.5 | 2.1 |
| $CeO_2$ | 0.1 | 0.1 | 0.15 | 0.14 | 0.09 | 0.1 | 0.07 | 0.11 | 0.12 | 0.14 |

(continued)

| Examples (wt%) | 21# | 22# | 23# | 24# | 25# | 26# | 27# | 28# | 29# | 30# |
|---|---|---|---|---|---|---|---|---|---|---|
| $Ag_2O$ | 0.29 | 0.33 | 0.22 | 0.21 | 0.5 | 0.31 | 0.3 | 0.4 | 0.32 | 0.4 |
| $Sb_2O_3$ | 0.07 | 0.23 | 0.42 | 0.3 | 0.43 | 0.29 | 0.22 | 0.21 | 0.14 | 0.46 |
| $SnO_2$ | 0.18 | 0.14 | 0.11 | 0.05 | 0.08 | 0.2 | 0.01 | 0.08 | 0.02 | 0.1 |
| $ZnO$ | 0 | 0 | 0 | 0 | 0 | 0 | 0 | 0 | 0 | 0 |
| $MgO$ | 0 | 0 | 0 | 0 | 0 | 0 | 0 | 0 | 0 | 0 |
| $CaO$ | 0 | 0 | 0 | 0 | 0 | 0 | 0 | 0 | 0 | 0 |
| $SrO$ | 0 | 0 | 0 | 0 | 0 | 0 | 0 | 0 | 0 | 0 |
| $BaO$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 6.2 | 5.5 | 5.9 | 10.6 | 5.4 | 4.2 | 7.7 | 5.5 | 7.8 | 4 |
| $SiO_2/Li_2O$ | 7.91 | 7.06 | 7.40 | 6.98 | 5.78 | 7.99 | 6.34 | 7.30 | 5.82 | 6.61 |
| $Sb_2O_3 + SnO_2$ | 0.25 | 0.37 | 0.53 | 0.35 | 0.51 | 0.49 | 0.23 | 0.29 | 0.16 | 0.56 |
| $(Sb_2O_3 + SnO_2)/Ag_2O$ | 0.86 | 1.12 | 2.41 | 1.67 | 1.02 | 1.58 | 0.77 | 0.73 | 0.5 | 1.4 |
| $Ag_2O/CeO_2$ | 2.9 | 3.3 | 1.47 | 1.5 | 5.56 | 3.1 | 4.29 | 3.64 | 2.67 | 2.86 |
| $Li_2O/ZrO_2$ | 1.67 | 1.85 | 2.04 | 4.17 | 3.24 | 2 | 7 | 3.38 | 1.78 | 5.62 |
| $(K_2O + Na_2O)/ZrO_2$ | 1.13 | 1 | 1.23 | 4.42 | 1.46 | 0.91 | 4.81 | 1.9 | 1.2 | 1.9 |
| $(SiO_2 + Li_2O)/ZrO_2$ | 14.9 | 14.95 | 17.15 | 33.25 | 22 | 17.98 | 51.38 | 28.03 | 12.17 | 42.76 |
| $MO/ZrO_2$ | 0 | 0 | 0 | 0 | 0 | 0 | 0 | 0 | 0 | 0 |
| $ZrO_2/(Ag_2O + CeO_2)$ | 14.1 | 12.79 | 12.97 | 6.86 | 6.27 | 11.22 | 4.32 | 5.69 | 14.77 | 3.89 |
| $(Ag_2O + SnO_2 + Sb_2O_3)/CeO_2$ | 5.4 | 7 | 5 | 4 | 11.22 | 8 | 7.57 | 6.27 | 4 | 6.86 |
| $(Sb_2O_3 + SnO_2 + CeO_2)/Ag_2O$ | 1.21 | 1.42 | 3.09 | 2.33 | 1.2 | 1.9 | 1 | 1 | 0.88 | 1.75 |
| $SnO_2/(CeO_2 + SnO_2)$ | 0.64 | 0.58 | 0.42 | 0.26 | 0.47 | 0.67 | 0.13 | 0.42 | 0.14 | 0.42 |
| $R_2O + Li_2O + Al_2O_3$ | 21.1 | 21.7 | 21.8 | 27.1 | 25.8 | 21 | 26.8 | 24.8 | 25.4 | 18.8 |
| $(SiO_2 + Al_2O_3)/(Li_2O + Na_2O + K_2O)$ | 5.09 | 4.97 | 5.01 | 3.7 | 4.47 | 6.05 | 4.17 | 5.29 | 3.79 | 5.13 |
| Transparent Part $T_{400\text{-}800\ nm}$ (%) | 90.8 | 91.6 | 91.6 | 92.0 | 92.0 | 90.5 | 92.0 | 92.0 | 92.0 | 90.5 |
| Blackened Part $T_{940\ nm}$ (%) | 12.6 | 7.0 | 7.9 | 2.1 | 6.4 | 0.9 | 17.0 | 17.5 | 24.6 | 0.5 |

(continued)

| Examples (wt%) | 21# | 22# | 23# | 24# | 25# | 26# | 27# | 28# | 29# | 30# |
|---|---|---|---|---|---|---|---|---|---|---|
| Blackened Part $T_{870\,nm}$ (%) | 4.4 | 2.5 | 2.8 | 0.7 | 2.2 | 0.3 | 6.0 | 6.2 | 8.6 | 0.2 |
| Blackened Part $T_{400\text{-}800\,nm}$ (%) | 0.2 | 0.4 | 0.4 | 0.3 | 0.4 | 0.1 | 0.6 | 0.6 | 0.7 | 0 |

Table 8.

| Examples (wt%) | 31# | 32# | 33# | 34# | 35# | 36# | 37# | 38# | 39# | 40# |
|---|---|---|---|---|---|---|---|---|---|---|
| $SiO_2$ | 71.1 | 70.9 | 73.5 | 72.3 | 74.2 | 72.5 | 72.1 | 72.9 | 70.1 | 70.5 |
| $Al_2O_3$ | 8.9 | 8.4 | 3.5 | 7.6 | 5.9 | 6 | 6 | 4.8 | 9.7 | 8 |
| $Li_2O$ | 8.5 | 10.2 | 11 | 9.6 | 9.8 | 10.4 | 10.7 | 10.8 | 7.4 | 11.6 |
| $K_2O$ | 1.8 | 3.2 | 3.8 | 2.3 | 3.2 | 3.4 | 4.5 | 3.7 | 4.6 | 1.1 |
| $Na_2O$ | 5.5 | 1.9 | 3.2 | 1.1 | 2.9 | 2.1 | 2.8 | 3.9 | 1.3 | 2.5 |
| $ZrO_2$ | 2 | 4.8 | 4.3 | 2 | 3.4 | 5.1 | 3 | 3.4 | 6.1 | 5.4 |
| $CeO_2$ | 0.15 | 0.12 | 0.09 | 0.15 | 0.09 | 0.1 | 0.11 | 0.1 | 0.13 | 0.13 |
| $Ag_2O$ | 0.36 | 0.24 | 0.23 | 0.34 | 0.29 | 0.22 | 0.3 | 0.25 | 0.24 | 0.3 |
| $Sb_2O_3$ | 0.5 | 0.21 | 0.31 | 0.43 | 0.15 | 0.08 | 0.39 | 0.14 | 0.35 | 0.44 |
| $SnO_2$ | 0.09 | 0.03 | 0.07 | 0.18 | 0.07 | 0.1 | 0.1 | 0.01 | 0.08 | 0.03 |
| $ZnO$ | 1.1 | 0 | 0 | 4 | 0 | 0 | 0 | 0 | 0 | 0 |
| $MgO$ | 0 | 0 | 0 | 0 | 0 | 0 | 0 | 0 | 0 | 0 |
| $CaO$ | 0 | 0 | 0 | 0 | 0 | 0 | 0 | 0 | 0 | 0 |
| $SrO$ | 0 | 0 | 0 | 0 | 0 | 0 | 0 | 0 | 0 | 0 |
| $BaO$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 7.3 | 5.1 | 7 | 3.4 | 6.1 | 5.5 | 7.3 | 7.6 | 5.9 | 3.6 |
| $SiO_2/Li_2O$ | 8.36 | 6.95 | 6.68 | 7.53 | 7.57 | 6.97 | 6.74 | 6.75 | 9.47 | 6.08 |
| $Sb_2O_3 + SnO_2$ | 0.59 | 0.24 | 0.38 | 0.61 | 0.22 | 0.18 | 0.49 | 0.15 | 0.43 | 0.47 |
| $(Sb_2O_3 + SnO_2)/Ag_2O$ | 1.64 | 1 | 1.65 | 1.79 | 0.76 | 0.82 | 1.63 | 0.60 | 1.79 | 1.57 |
| $Ag_2O/CeO_2$ | 2.4 | 2 | 2.56 | 2.27 | 3.22 | 2.2 | 2.73 | 2.5 | 1.85 | 2.31 |
| $Li_2O/ZrO_2$ | 4.25 | 2.13 | 2.56 | 4.8 | 2.88 | 2.04 | 3.57 | 3.18 | 1.21 | 2.15 |
| $(K_2O + Na_2O)/ZrO_2$ | 3.65 | 1.06 | 1.63 | 1.7 | 1.79 | 1.08 | 2.43 | 2.24 | 0.97 | 0.67 |
| $(SiO_2 + Li_2O)/ZrO_2$ | 39.8 | 16.9 | 19.65 | 40.95 | 24.71 | 16.25 | 27.6 | 24.62 | 12.7 | 15.2 |
| $MO/ZrO_2$ | 0.55 | 0 | 0 | 2 | 0 | 0 | 0 | 0 | 0 | 0 |
| $ZrO_2/(Ag_2O + CeO_2)$ | 3.92 | 13.33 | 13.44 | 4.08 | 8.95 | 15.94 | 7.32 | 9.71 | 16.49 | 12.56 |
| $(Ag_2O + SnO_2 + Sb_2O_3)/CeO_2$ | 6.33 | 4 | 6.78 | 6.33 | 5.67 | 4 | 7.18 | 4 | 5.15 | 5.92 |

(continued)

| Examples (wt%) | 31# | 32# | 33# | 34# | 35# | 36# | 37# | 38# | 39# | 40# |
|---|---|---|---|---|---|---|---|---|---|---|
| $(Sb_2O_3 + SnO_2 + CeO_2)/Ag_2O$ | 2.06 | 1.5 | 2.04 | 2.24 | 1.07 | 1.27 | 2 | 1 | 2.33 | 2 |
| $SnO_2/(CeO_2 + SnO_2)$ | 0.38 | 0.2 | 0.44 | 0.55 | 0.44 | 0.5 | 0.48 | 0.09 | 0.38 | 0.19 |
| $R_2O + Li_2O + Al_2O_3$ | 24.7 | 23.7 | 21.5 | 20.6 | 21.8 | 21.9 | 24 | 23.2 | 23 | 23.2 |
| $(SiO_2 + Al_2O_3)/(Li_2O + Na_2O + K_2O)$ | 5.06 | 5.18 | 4.28 | 6.15 | 5.04 | 4.94 | 4.34 | 4.22 | 6 | 5.16 |
| Transparent Part $T_{400\text{-}800\ nm}$ (%) | 91.8 | 92.0 | 92.0 | 90.8 | 92.0 | 92.0 | 92.0 | 92.0 | 92.0 | 92.0 |
| Blackened Part $T_{940\ nm}$ (%) | 0.3 | 7.1 | 0.5 | 0.9 | 22.7 | 9.7 | 0.7 | 21.7 | 0.3 | 1.0 |
| Blackened Part $T_{870\ nm}$ (%) | 0.1 | 2.5 | 0.2 | 0.3 | 8.0 | 3.4 | 0.2 | 7.6 | 0.1 | 0.3 |
| Blackened Part $T_{400\text{-}800\ nm}$ (%) | 0 | 0.4 | 0 | 0 | 0.7 | 0.2 | 0 | 0.7 | 0 | 0.1 |

<Examples of the Photosensitive Microcrystalline Glass Product>

The Examples applied the above preparation method of the photosensitive microcrystalline glass product to obtain the photosensitive microcrystalline glass products having the composition shown in Tables 9-12. Additionally, the properties of various photosensitive microcrystalline glass products were determined by the testing methods of the present invention, and the testing results were shown in Tables 9-12, and in the following Examples the transmittances of the photosensitive microcrystalline glass products were determined by using samples with a thickness of 1 mm.

Table 9.

| Examples (wt%) | 1# | 2# | 3# | 4# | 5# | 6# | 7# | 8# | 9# | 10# |
|---|---|---|---|---|---|---|---|---|---|---|
| $SiO_2$ | 72.66 | 67.2 | 69.9 | 65 | 77.19 | 74.37 | 75.58 | 70.1 | 69.2 | 71.5 |
| $Al_2O_3$ | 7.4 | 9.46 | 6.9 | 10 | 3 | 6.7 | 5.5 | 5.9 | 7.7 | 9 |
| $Li_2O$ | 10 | 8.7 | 11.6 | 10.5 | 9.9 | 10.6 | 8.6 | 11.5 | 8.7 | 8.3 |
| $K_2O$ | 4.2 | 3.8 | 3.5 | 5.5 | 2.5 | 2.7 | 4.8 | 4.1 | 5.1 | 2.2 |
| $Na_2O$ | 2.2 | 5.6 | 4.9 | 3.6 | 3 | 2.6 | 1.7 | 3.9 | 4.3 | 5 |
| $ZrO_2$ | 2.6 | 4.5 | 2.2 | 4.6 | 3.5 | 2.5 | 3.1 | 3.2 | 4 | 1.5 |
| $CeO_2$ | 0.1 | 0.07 | 0.12 | 0.06 | 0.14 | 0.07 | 0.08 | 0.14 | 0.1 | 0.09 |
| $Ag_2O$ | 0.2 | 0.42 | 0.38 | 0.32 | 0.34 | 0.27 | 0.33 | 0.45 | 0.47 | 0.41 |
| $Sb_2O_3$ | 0.52 | 0.2 | 0.36 | 0.32 | 0.42 | 0.15 | 0.15 | 0.09 | 0.32 | 0.46 |
| $SnO_2$ | 0.12 | 0.05 | 0.14 | 0.1 | 0.01 | 0.04 | 0.16 | 0.12 | 0.11 | 0.04 |
| ZnO | 0 | 0 | 0 | 0 | 0 | 0 | 0 | 0 | 0 | 1.5 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |

(continued)

| Examples (wt%) | 1# | 2# | 3# | 4# | 5# | 6# | 7# | 8# | 9# | 10# |
|---|---|---|---|---|---|---|---|---|---|---|
| $Fe_2O_3$ | 0 | 0 | 0 | 0 | 0 | 0 | 0 | 0.5 | 0 | 0 |
| Total | 100 | 100 | 100 | 100 | 100 | 100 | 100 | 100 | 100 | 100 |
| $R_2O$ | 6.4 | 9.4 | 8.4 | 9.1 | 5.5 | 5.3 | 6.5 | 8 | 9.4 | 7.2 |
| $SiO_2/Li_2O$ | 7.27 | 7.72 | 6.03 | 6.19 | 7.8 | 7.02 | 8.79 | 6.1 | 7.95 | 8.61 |
| $Sb_2O_3 + SnO_2$ | 0.64 | 0.25 | 0.5 | 0.42 | 0.43 | 0.19 | 0.31 | 0.21 | 0.43 | 0.5 |
| $(Sb_2O_3 + SnO_2)/Ag_2O$ | 3.2 | 0.6 | 1.32 | 1.31 | 1.26 | 0.7 | 0.94 | 0.47 | 0.91 | 1.22 |
| $Ag_2O/CeO_2$ | 2 | 6 | 3.17 | 5.33 | 2.43 | 3.86 | 4.13 | 3.21 | 4.7 | 4.56 |
| $Li_2O/ZrO_2$ | 3.85 | 1.93 | 5.27 | 2.28 | 2.83 | 4.24 | 2.77 | 3.59 | 2.18 | 5.53 |
| $(K_2O + Na_2O)/ZrO_2$ | 2.46 | 2.09 | 3.82 | 1.98 | 1.57 | 2.12 | 2.1 | 2.5 | 2.35 | 4.8 |
| $(SiO_2 + Li_2O)/ZrO_2$ | 31.79 | 16.87 | 37.05 | 16.41 | 24.88 | 33.99 | 27.15 | 25.50 | 19.48 | 53.2 |
| $MO/ZrO_2$ | 0 | 0 | 0 | 0 | 0 | 0 | 0 | 0 | 0 | 1 |
| $ZrO_2/(Ag_2O + CeO_2)$ | 8.67 | 9.18 | 4.4 | 12.11 | 7.29 | 7.35 | 7.56 | 5.42 | 7.02 | 3 |
| $(Ag_2O + SnO_2 + Sb_2O_3)/CeO_2$ | 8.4 | 9.57 | 7.33 | 12.33 | 5.5 | 6.57 | 8 | 4.71 | 9 | 10.11 |
| $(Sb_2O_3 + SnO_2 + CeO_2)/Ag_2O$ | 3.7 | 0.76 | 1.63 | 1.50 | 1.68 | 0.96 | 1.18 | 0.78 | 1.13 | 1.44 |
| $SnO_2/(CeO_2 + SnO_2)$ | 0.55 | 0.42 | 0.54 | 0.63 | 0.07 | 0.36 | 0.67 | 0.46 | 0.52 | 0.31 |
| $R_2O + Li_2O + Al_2O_3$ | 23.8 | 27.56 | 26.9 | 29.6 | 18.4 | 22.6 | 20.6 | 25.4 | 25.8 | 24.5 |
| $(SiO_2 + Al_2O_3)/(Li_2O + Na_2O + K_2O)$ | 4.88 | 4.24 | 3.84 | 3.83 | 5.21 | 5.1 | 5.37 | 3.9 | 4.25 | 5.19 |
| Transparent Part $T_{400-800\,nm}$ (%) | 91.8 | 92.0 | 91.6 | 91.8 | 92.0 | 92.0 | 90.7 | 91.6 | 91.8 | 92.0 |
| Blackened Part $T_{940\,nm}$ (%) | 0.3 | 21.7 | 3.3 | 2.8 | 4.0 | 17.1 | 10.1 | 2.5 | 11.1 | 4.8 |
| Blackened Part $T_{870\,nm}$ (%) | 0.3 | 7.6 | 1.2 | 1.0 | 1.4 | 6.0 | 3.5 | 0.9 | 3.9 | 1.7 |
| Blackened Part $T_{400-800\,nm}$ (%) | 0 | 0.7 | 0.3 | 0.3 | 0.3 | 0.6 | 0.5 | 0.3 | 0.5 | 0.3 |
| Height II for the falling ball test (mm) | 1,200 | 800 | 900 | 800 | 800 | 1,200 | 900 | 1,100 | 800 | 1,200 |

Table 10.

| Examples (wt%) | 11# | 12# | 13# | 14# | 15# | 16# | 17# | 18# | 19# | 20# |
|---|---|---|---|---|---|---|---|---|---|---|
| $SiO_2$ | 73.78 | 72.36 | 76.2 | 74.27 | 69.2 | 72.56 | 70.4 | 72.7 | 76.3 | 75.4 |
| $Al_2O_3$ | 6.9 | 5.3 | 3.8 | 4.9 | 5.5 | 4.9 | 7 | 7.8 | 5.4 | 6.4 |
| $Li_2O$ | 7.5 | 8.3 | 9.2 | 9.6 | 10.4 | 7.3 | 11.9 | 10 | 10.5 | 8 |

(continued)

| Examples (wt%) | 11# | 12# | 13# | 14# | 15# | 16# | 17# | 18# | 19# | 20# |
|---|---|---|---|---|---|---|---|---|---|---|
| $K_2O$ | 1.1 | 3.4 | 2.4 | 3 | 3.8 | 3.3 | 4 | 3.3 | 1.4 | 2.3 |
| $Na_2O$ | 3.4 | 3.7 | 2 | 2.5 | 4.4 | 4.1 | 1.5 | 1.3 | 1.5 | 2.2 |
| $ZrO_2$ | 6.6 | 6.1 | 5.6 | 4.5 | 6.2 | 5.3 | 4.7 | 4.1 | 3.9 | 5.2 |
| $CeO_2$ | 0.07 | 0.13 | 0.13 | 0.1 | 0.09 | 0.1 | 0.12 | 0.11 | 0.13 | 0.11 |
| $Ag_2O$ | 0.42 | 0.44 | 0.3 | 0.46 | 0.24 | 0.37 | 0.23 | 0.22 | 0.32 | 0.23 |
| $Sb_2O_3$ | 0.07 | 0.1 | 0.22 | 0.55 | 0.07 | 0.06 | 0.08 | 0.45 | 0.51 | 0.11 |
| $SnO_2$ | 0.16 | 0.17 | 0.15 | 0.12 | 0.1 | 0.01 | 0.07 | 0.02 | 0.04 | 0.05 |
| ZnO | 0 | 0 | 0 | 0 | 0 | 0 | 0 | 0 | 0 | 0 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 2 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 4.5 | 7.1 | 4.4 | 5.5 | 8.2 | 7.4 | 5.5 | 4.6 | 2.9 | 4.5 |
| $SiO_2/Li_2O$ | 9.84 | 8.72 | 8.28 | 7.74 | 6.65 | 9.94 | 5.92 | 7.27 | 7.27 | 9.43 |
| $Sb_2O_3 + SnO_2$ | 0.23 | 0.27 | 0.37 | 0.67 | 0.17 | 0.07 | 0.15 | 0.47 | 0.55 | 0.16 |
| $(Sb_2O_3 + SnO_2)/Ag_2O$ | 0.55 | 0.61 | 1.23 | 1.46 | 0.71 | 0.19 | 0.65 | 2.14 | 1.72 | 0.7 |
| $Ag_2O/CeO_2$ | 6 | 3.38 | 2.31 | 4.6 | 2.67 | 3.7 | 1.92 | 2 | 2.46 | 2.09 |
| $Li_2O/ZrO_2$ | 1.14 | 1.36 | 1.64 | 2.13 | 1.68 | 1.38 | 2.53 | 2.44 | 2.69 | 1.54 |
| $(K_2O + Na_2O)/ZrO_2$ | 0.68 | 1.16 | 0.79 | 1.22 | 1.32 | 1.4 | 1.17 | 1.12 | 0.74 | 0.87 |
| $(SiO_2 + Li_2O)/ZrO_2$ | 12.32 | 13.22 | 15.25 | 18.64 | 12.84 | 15.07 | 17.51 | 20.17 | 22.26 | 16.04 |
| $MO/ZrO_2$ | 0 | 0 | 0 | 0 | 0 | 0 | 0 | 0 | 0 | 0 |
| $ZrO_2/(Ag_2O + CeO_2)$ | 13.47 | 10.7 | 13.02 | 8.04 | 18.79 | 11.28 | 13.43 | 12.42 | 8.67 | 15.29 |
| $(Ag_2O + SnO_2 + Sb_2O_3)/CeO_2$ | 9.29 | 5.46 | 5.15 | 11.3 | 4.56 | 4.4 | 3.17 | 6.27 | 6.69 | 3.55 |
| $(Sb_2O_3 + SnO_2 + CeO_2)/Ag_2O$ | 0.71 | 0.91 | 1.67 | 1.67 | 1.08 | 0.46 | 1.17 | 2.64 | 2.13 | 1.17 |
| $SnO_2/(CeO_2 + SnO_2)$ | 0.7 | 0.57 | 0.54 | 0.55 | 0.53 | 0.09 | 0.37 | 0.15 | 0.24 | 0.31 |
| $R_2O + Li_2O + Al_2O_3$ | 18.9 | 20.7 | 17.4 | 20 | 24.1 | 19.6 | 24.4 | 22.4 | 18.8 | 18.9 |
| $(SiO_2 + Al_2O_3)/(Li_2O + Na_2O + K_2O)$ | 6.72 | 5.04 | 5.88 | 5.24 | 4.02 | 5.27 | 4.45 | 5.51 | 6.1 | 6.54 |

(continued)

| Examples (wt%) | 11# | 12# | 13# | 14# | 15# | 16# | 17# | 18# | 19# | 20# |
|---|---|---|---|---|---|---|---|---|---|---|
| Transparent Part $T_{400\text{-}800\,nm}$ (%) | 90.7 | 90.7 | 91.5 | 90.7 | 91.8 | 92.0 | 92.0 | 92.0 | 92.0 | 92.0 |
| Blackened Part $T_{940\,nm}$ (%) | 20.7 | 18.8 | 4.7 | 1.0 | 19.7 | 35.9 | 18.3 | 0.4 | 0.4 | 12.8 |
| Blackened Part $T_{870\,nm}$ (%) | 7.3 | 6.6 | 1.7 | 0.4 | 6.9 | 12.6 | 6.4 | 0.1 | 0.1 | 4.5 |
| Blackened Part $T_{400\text{-}800}$ nm (%) | 0.7 | 0.6 | 0.3 | 0.2 | 0.6 | 1.2 | 0.6 | 0 | 0 | 0.2 |
| Height II for the falling ball test (mm) | 800 | 900 | 900 | 1,000 | 800 | 800 | 800 | 1,200 | 1,100 | 800 |

Table 11.

| Examples (wt%) | 21# | 22# | 23# | 24# | 25# | 26# | 27# | 28# | 29# | 30# |
|---|---|---|---|---|---|---|---|---|---|---|
| $SiO_2$ | 72.76 | 72 | 72.5 | 69.8 | 69.4 | 73.5 | 71 | 71.5 | 67.5 | 78 |
| $Al_2O_3$ | 5.7 | 6 | 6.1 | 6.5 | 8.4 | 7.6 | 7.9 | 9.5 | 6 | 3 |
| $Li_2O$ | 9.2 | 10.2 | 9.8 | 10 | 12 | 9.2 | 11.2 | 9.8 | 11.6 | 11.8 |
| $K_2O$ | 4.3 | 3 | 3.1 | 5.2 | 2.1 | 2.5 | 3.7 | 1.8 | 3.7 | 3 |
| $Na_2O$ | 1.9 | 2.5 | 2.8 | 5.4 | 3.3 | 1.7 | 4 | 3.7 | 4.1 | 1 |
| $ZrO_2$ | 5.5 | 5.5 | 4.8 | 2.4 | 3.7 | 4.6 | 1.6 | 2.9 | 6.5 | 2.1 |
| $CeO_2$ | 0.1 | 0.1 | 0.15 | 0.14 | 0.09 | 0.1 | 0.07 | 0.11 | 0.12 | 0.14 |
| $Ag_2O$ | 0.29 | 0.33 | 0.22 | 0.21 | 0.5 | 0.31 | 0.3 | 0.4 | 0.32 | 0.4 |
| $Sb_2O_3$ | 0.07 | 0.23 | 0.42 | 0.3 | 0.43 | 0.29 | 0.22 | 0.21 | 0.14 | 0.46 |
| $SnO_2$ | 0.18 | 0.14 | 0.11 | 0.05 | 0.08 | 0.2 | 0.01 | 0.08 | 0.02 | 0.1 |
| ZnO | 0 | 0 | 0 | 0 | 0 | 0 | 0 | 0 | 0 | 0 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 6.2 | 5.5 | 5.9 | 10.6 | 5.4 | 4.2 | 7.7 | 5.5 | 7.8 | 4 |
| $SiO_2/Li_2O$ | 7.91 | 7.06 | 7.40 | 6.98 | 5.78 | 7.99 | 6.34 | 7.30 | 5.82 | 6.61 |
| $Sb_2O_3 + SnO_2$ | 0.25 | 0.37 | 0.53 | 0.35 | 0.51 | 0.49 | 0.23 | 0.29 | 0.16 | 0.56 |
| $(Sb_2O_3 + SnO_2)/Ag_2O$ | 0.86 | 1.12 | 2.41 | 1.67 | 1.02 | 1.58 | 0.77 | 0.73 | 0.5 | 1.4 |
| $Ag_2O/CeO_2$ | 2.9 | 3.3 | 1.47 | 1.5 | 5.56 | 3.1 | 4.29 | 3.64 | 2.67 | 2.86 |
| $Li_2O/ZrO_2$ | 1.67 | 1.85 | 2.04 | 4.17 | 3.24 | 2 | 7 | 3.38 | 1.78 | 5.62 |

(continued)

| Examples (wt%) | 21# | 22# | 23# | 24# | 25# | 26# | 27# | 28# | 29# | 30# |
|---|---|---|---|---|---|---|---|---|---|---|
| $(K_2O + Na_2O)/ZrO_2$ | 1.13 | 1 | 1.23 | 4.42 | 1.46 | 0.91 | 4.81 | 1.9 | 1.2 | 1.9 |
| $(SiO_2 + Li_2O)/ZrO_2$ | 14.9 | 14.95 | 17.15 | 33.25 | 22 | 17.98 | 51.38 | 28.03 | 12.17 | 42.76 |
| $MO/ZrO_2$ | 0 | 0 | 0 | 0 | 0 | 0 | 0 | 0 | 0 | 0 |
| $ZrO_2/(Ag_2O + CeO_2)$ | 14.1 | 12.79 | 12.97 | 6.86 | 6.27 | 11.22 | 4.32 | 5.69 | 14.77 | 3.89 |
| $(Ag_2O + SnO_2 + Sb_2O_3)/CeO_2$ | 5.4 | 7 | 5 | 4 | 11.22 | 8 | 7.57 | 6.27 | 4 | 6.86 |
| $(Sb_2O_3 + SnO_2 + CeO_2)/Ag_2O$ | 1.21 | 1.42 | 3.09 | 2.33 | 1.2 | 1.9 | 1 | 1 | 0.88 | 1.75 |
| $SnO_2/(CeO_2 + SnO_2)$ | 0.64 | 0.58 | 0.42 | 0.26 | 0.47 | 0.67 | 0.13 | 0.42 | 0.14 | 0.42 |
| $R_2O + Li_2O + Al_2O_3$ | 21.1 | 21.7 | 21.8 | 27.1 | 25.8 | 21 | 26.8 | 24.8 | 25.4 | 18.8 |
| $(SiO_2 + Al_2O_3)/(Li_2O + Na_2O + K_2O)$ | 5.09 | 4.97 | 5.01 | 3.7 | 4.47 | 6.05 | 4.17 | 5.29 | 3.79 | 5.13 |
| Transparent Part $T_{400-800\ nm}$ (%) | 90.8 | 91.6 | 91.6 | 92.0 | 92.0 | 90.5 | 92.0 | 92.0 | 92.0 | 90.5 |
| Blackened Part $T_{940\ nm}$ (%) | 12.6 | 7.0 | 7.9 | 2.1 | 6.4 | 0.9 | 17.0 | 17.5 | 24.6 | 0.5 |
| Blackened Part $T_{870\ nm}$ (%) | 4.4 | 2.5 | 2.8 | 0.7 | 2.2 | 0.3 | 6.0 | 6.2 | 8.6 | 0.2 |
| Blackened Part $T_{400-800\ nm}$ (%) | 0.2 | 0.4 | 0.4 | 0.3 | 0.4 | 0.1 | 0.6 | 0.6 | 0.7 | 0 |
| Height II for the falling ball test (mm) | 1,200 | 1,200 | 1,100 | 800 | 800 | 1,200 | 900 | 1,200 | 800 | 1,000 |

Table 12.

| Examples (wt%) | 31# | 32# | 33# | 34# | 35# | 36# | 37# | 38# | 39# | 40# |
|---|---|---|---|---|---|---|---|---|---|---|
| $SiO_2$ | 71.1 | 70.9 | 73.5 | 72.3 | 74.2 | 72.5 | 72.1 | 72.9 | 70.1 | 70.5 |
| $Al_2O_3$ | 8.9 | 8.4 | 3.5 | 7.6 | 5.9 | 6 | 6 | 4.8 | 9.7 | 8 |
| $Li_2O$ | 8.5 | 10.2 | 11 | 9.6 | 9.8 | 10.4 | 10.7 | 10.8 | 7.4 | 11.6 |
| $K_2O$ | 1.8 | 3.2 | 3.8 | 2.3 | 3.2 | 3.4 | 4.5 | 3.7 | 4.6 | 1.1 |
| $Na_2O$ | 5.5 | 1.9 | 3.2 | 1.1 | 2.9 | 2.1 | 2.8 | 3.9 | 1.3 | 2.5 |
| $ZrO_2$ | 2 | 4.8 | 4.3 | 2 | 3.4 | 5.1 | 3 | 3.4 | 6.1 | 5.4 |
| $CeO_2$ | 0.15 | 0.12 | 0.09 | 0.15 | 0.09 | 0.1 | 0.11 | 0.1 | 0.13 | 0.13 |
| $Ag_2O$ | 0.36 | 0.24 | 0.23 | 0.34 | 0.29 | 0.22 | 0.3 | 0.25 | 0.24 | 0.3 |
| $Sb_2O_3$ | 0.5 | 0.21 | 0.31 | 0.43 | 0.15 | 0.08 | 0.39 | 0.14 | 0.35 | 0.44 |
| $SnO_2$ | 0.09 | 0.03 | 0.07 | 0.18 | 0.07 | 0.1 | 0.1 | 0.01 | 0.08 | 0.03 |
| $ZnO$ | 1.1 | 0 | 0 | 4 | 0 | 0 | 0 | 0 | 0 | 0 |
| $MgO$ | 0 | 0 | 0 | 0 | 0 | 0 | 0 | 0 | 0 | 0 |

(continued)

| Examples (wt%) | 31# | 32# | 33# | 34# | 35# | 36# | 37# | 38# | 39# | 40# |
|---|---|---|---|---|---|---|---|---|---|---|
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 7.3 | 5.1 | 7 | 3.4 | 6.1 | 5.5 | 7.3 | 7.6 | 5.9 | 3.6 |
| $SiO_2/Li_2O$ | 8.36 | 6.95 | 6.68 | 7.53 | 7.57 | 6.97 | 6.74 | 6.75 | 9.47 | 6.08 |
| $Sb_2O_3 + SnO_2$ | 0.59 | 0.24 | 0.38 | 0.61 | 0.22 | 0.18 | 0.49 | 0.15 | 0.43 | 0.47 |
| $(Sb_2O_3 + SnO_2)/Ag_2O$ | 1.64 | 1 | 1.65 | 1.79 | 0.76 | 0.82 | 1.63 | 0.60 | 1.79 | 1.57 |
| $Ag_2O/CeO_2$ | 2.4 | 2 | 2.56 | 2.27 | 3.22 | 2.2 | 2.73 | 2.5 | 1.85 | 2.31 |
| $Li_2O/ZrO_2$ | 4.25 | 2.13 | 2.56 | 4.8 | 2.88 | 2.04 | 3.57 | 3.18 | 1.21 | 2.15 |
| $(K_2O + Na_2O)/ZrO_2$ | 3.65 | 1.06 | 1.63 | 1.7 | 1.79 | 1.08 | 2.43 | 2.24 | 0.97 | 0.67 |
| $(SiO_2 + Li_2O)/ZrO_2$ | 39.8 | 16.9 | 19.65 | 40.95 | 24.71 | 16.25 | 27.6 | 24.62 | 12.7 | 15.2 |
| $MO/ZrO_2$ | 0.55 | 0 | 0 | 2 | 0 | 0 | 0 | 0 | 0 | 0 |
| $ZrO_2/(Ag_2O + CeO_2)$ | 3.92 | 13.33 | 13.44 | 4.08 | 8.95 | 15.94 | 7.32 | 9.71 | 16.49 | 12.56 |
| $(Ag_2O + SnO_2 + Sb_2O_3)/CeO_2$ | 6.33 | 4 | 6.78 | 6.33 | 5.67 | 4 | 7.18 | 4 | 5.15 | 5.92 |
| $(Sb_2O_3 + SnO_2 + CeO_2)/Ag_2O$ | 2.06 | 1.5 | 2.04 | 2.24 | 1.07 | 1.27 | 2 | 1 | 2.33 | 2 |
| $SnO_2/(CeO_2 + SnO_2)$ | 0.38 | 0.2 | 0.44 | 0.55 | 0.44 | 0.5 | 0.48 | 0.09 | 0.38 | 0.19 |
| $R_2O + Li_2O + Al_2O_3$ | 24.7 | 23.7 | 21.5 | 20.6 | 21.8 | 21.9 | 24 | 23.2 | 23 | 23.2 |
| $(SiO_2 + Al_2O_3)/(Li_2O + Na_2O + K_2O)$ | 5.06 | 5.18 | 4.28 | 6.15 | 5.04 | 4.94 | 4.34 | 4.22 | 6 | 5.16 |
| Transparent Part $T_{400-800\ nm}$ (%) | 91.8 | 92.0 | 92.0 | 90.8 | 92.0 | 92.0 | 92.0 | 92.0 | 92.0 | 92.0 |
| Blackened Part $T_{940\ nm}$ (%) | 0.3 | 7.1 | 0.5 | 0.9 | 22.7 | 9.7 | 0.7 | 21.7 | 0.3 | 1.0 |
| Blackened Part $T_{870\ nm}$ (%) | 0.1 | 2.5 | 0.2 | 0.3 | 8.0 | 3.4 | 0.2 | 7.6 | 0.1 | 0.3 |
| Blackened Part $T_{400-800\ nm}$ (%) | 0 | 0.4 | 0 | 0 | 0.7 | 0.2 | 0 | 0.7 | 0 | 0.1 |
| Height II for the falling ball test (mm) | 1,200 | 1,100 | 1,000 | 900 | 800 | 800 | 800 | 800 | 800 | 800 |

Further advantageous embodiments of the invention are captioned below:

1. A photosensitive glass material, characterized by comprising the following components in percentage by weight: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; and 0.01-0.8% of $Ag_2O$, wherein $Li_2O/ZrO_2$ is 1.0-7.5, and the $R_2O$ is one or two of $Na_2O$ and $K_2O$.

2. The photosensitive glass material according to embodiment 1, characterized by further comprising the following components in percentage by weight: 0-1% of $Sb_2O_3$; and/or 0-0.5% of $SnO_2$; and/or 0-5% of MO; and/or 0-5% of $Ln_2O_3$; and/or 0-1% of $Fe_2O_3$, wherein the MO is one or more of MgO, CaO, SrO, BaO, and ZnO, and $Ln_2O_3$ is one or more of $La_2O_3$, $Gd_2O_3$, and $Y_2O_3$.

3. A photosensitive glass material, characterized by comprising the following components in percentage by weight: $SiO_2$, $R_2O$, $Li_2O$, $Al_2O_3$, $ZrO_2$, $CeO_2$ and $Ag_2O$, wherein $Li_2O/ZrO_2$ is 1.0-7.5, the $R_2O$ is one or two of $Na_2O$ and $K_2O$, and dielectric loss $tan\delta$ of the photosensitive glass material is below $11.0 \times 10^{-3}$.

4. The photosensitive glass material according to embodiment 3, characterized by comprising the following components in percentage by weight: 65-78% of $SiO_2$; and/or 2-12% of $R_2O$; and/or 5-15% of $Li_2O$; and/or 3-12% of $Al_2O_3$; and/or 1.5-10% of $ZrO_2$; and/or 0.01-0.6% of $CeO_2$; and/or 0.01-0.8% of $Ag_2O$; and/or 0-1% of $Sb_2O_3$; and/or 0-0.5% of $SnO_2$; and/or 0-5% of MO; and/or 0-5% of $Ln_2O_3$; and/or 0-1% of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

5. The photosensitive glass material according to any one of embodiments 1-4, characterized in that, components thereof in percentage by weight satisfy one or more of the following 7 circumstances:

1) $SiO_2/Li_2O$ is 5.5-10.0, preferably $SiO_2/Li_2O$ is 6.0-9.0, and more preferably $SiO_2/Li_2O$ is 7.0-8.5;
2) $(K_2O + Na_2O)/ZrO_2$ is 0.5-7.1, preferably $(K_2O + Na_2O)/ZrO_2$ is 0.7-4.5, and more preferably $(K_2O + Na_2O)/ZrO_2$ is 0.8-2.5;
3) $Li_2O/ZrO_2$ is 1.2-5.0, preferably $Li_2O/ZrO_2$ is 1.4-4.3, and more preferably $Li_2O/ZrO_2$ is 1.6-3.0;
4) $(SiO_2 + Li_2O)/ZrO_2$ is 8.0-55.0, preferably $(SiO_2 + Li_2O)/ZrO_2$ is 10.0-37.0, more preferably $(SiO_2 + Li_2O)/ZrO_2$ is 12.0-25.0, and further preferably $(SiO_2 + Li_2O)/ZrO_2$ is 13.0-20.0;
5) $(SiO_2 + Al_2O_3)/(Li_2O + Na_2O + K_2O)$ is 3.0-7.5, preferably $(SiO_2 + Al_2O_3)/(Li_2O + Na_2O + K_2O)$ is 3.7-6.5, more preferably $(SiO_2 + Al_2O_3)/(Li_2O + Na_2O + K_2O)$ is 4.3-6.0, and further preferably $(SiO_2 + Al_2O_3)/(Li_2O + Na_2O + K_2O)$ is 4.8-5.8;
6) $R_2O + Li_2O + Al_2O_3$ is 15-30%, preferably $R_2O + Li_2O + Al_2O_3$ is 17.5-29.5%, more preferably $R_2O + Li_2O + Al_2O_3$ is 18.5-26%, and further preferably $R_2O + Li_2O + Al_2O_3$ is 20-25%; and
7) $MO/ZrO_2$ is below 2.5, preferably $MO/ZrO_2$ is below 1.5, and more preferably $MO/ZrO_2$ is below 0.5,

the MO is one or more of MgO, CaO, SrO, BaO, and ZnO, and $R_2O$ is one or two of $Na_2O$ and $K_2O$.

6. The photosensitive glass material according to any one of embodiments 1-4, characterized in that, components thereof in percentage by weight satisfy one or more of the following 7 circumstances:

1) $(Sb_2O_3 + SnO_2)/Ag_2O$ is 0.1-5.0, preferably $(Sb_2O_3 + SnO_2)/Ag_2O$ is 0.5-3.5, and more preferably $(Sb_2O_3 + SnO_2)/Ag_2O$ is 1.0-2.6;
2) $Ag_2O/CeO_2$ is 1.0-10.0, preferably $Ag_2O/CeO_2$ is 1.5-6.5, and more preferably $Ag_2O/CeO_2$ is 2.0-4.5;
3) $ZrO_2/(Ag_2O + CeO_2)$ is 2.3-50.0, preferably $ZrO_2/(Ag_2O + CeO_2)$ is 6.5-35.0, more preferably $ZrO_2/(Ag_2O + CeO_2)$ is 8.5-20.0, and further preferably $ZrO_2/(Ag_2O + CeO_2)$ is 11.0-18.0;
4) $(Ag_2O + SnO_2 + Sb_2O_3)/CeO_2$ is 1.0-30.0, preferably $(Ag_2O + SnO_2 + Sb_2O_3)/CeO_2$ is 3.0-20.0, more preferably $(Ag_2O + SnO_2 + Sb_2O_3)/CeO_2$ is 5.0-12.5, and further preferably $(Ag_2O + SnO_2 + Sb_2O_3)/CeO_2$ is 7.5-10.0;
5) $(Sb_2O_3 + SnO_2 + CeO_2)/Ag_2O$ is 0.1-10.0, preferably $(Sb_2O_3 + SnO_2 + CeO_2)/Ag_2O$ is 0.4-5.0, more preferably $(Sb_2O_3 + SnO_2 + CeO_2)/Ag_2O$ is 0.7-3.7, and further preferably $(Sb_2O_3 + SnO_2 + CeO_2)/Ag_2O$ is 1.5-3.2;
6) $SnO_2/(CeO_2 + SnO_2)$ is 0-0.9, preferably $SnO_2/(CeO_2 + SnO_2)$ is 0-0.6, and more preferably $SnO_2/(CeO_2 + SnO_2)$ is 0-0.5; and
7) $Sb_2O_3 + SnO_2$ is 0.05-1.2%, preferably $Sb_2O_3 + SnO_2$ is 0.1-1%, and more preferably

$Sb_2O_3 + SnO_2$ is 0.2-0.7%.

7. The photosensitive glass material according to any one of embodiments 1-4, characterized by comprising the following components in percentage by weight: 68-77% of $SiO_2$, preferably 69.5-75.5% of $SiO_2$; and/or 3-10% of $R_2O$, preferably 4-8% of $R_2O$; and/or 7-13% of $Li_2O$, preferably 8.5-12% of $Li_2O$; and/or 4-10% of $Al_2O_3$, preferably 5-9% of $Al_2O_3$; and/or 2-8% of $ZrO_2$, preferably 3-6.5% of $ZrO_2$; and/or 0.07-0.4% of $CeO_2$, preferably 0.08-0.3% of $CeO_2$; and/or 0.1-0.6% of $Ag_2O$, preferably 0.2-0.5% of $Ag_2O$; and/or 0.01-0.7% of $Sb_2O_3$, preferably 0.07-0.5% of $Sb_2O_3$; and/or 0-0.3% of $SnO_2$, preferably 0-0.2% of $SnO_2$; and/or 0-3% of MO, preferably 0-1% of MO, more preferably free of MO; and/or 0-3% of $Ln_2O_3$, preferably 0-1% of $Ln_2O_3$, more preferably free of $Ln_2O_3$; and/or 0-0.5% of $Fe_2O_3$,

preferably 0-0.2% of $Fe_2O_3$, more preferably free of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

8. The photosensitive glass material according to any one of embodiments 1-4, characterized in that, the photosensitive glass material has a refractive index $n_d$ of 1.51-1.55, preferably 1.52-1.54, more preferably 1.53-1.535, and further preferably 1.53112-1.53284; and/or Young's modulus E of $7,000 \times 10^7$ Pa-$9,500 \times 10^7$ Pa, preferably $7,500 \times 10^7$ Pa-$9,200 \times 10^7$ Pa, more preferably $7,836 \times 10^7$ Pa-$9,014 \times 10^7$ Pa, and further preferably $8,005 \times 10^7$ Pa-$8,488 \times 10^7$ Pa; and/or Knoop hardness $Hk_{0.1}$ above 450 $kgf/mm^2$, preferably 470-600 $kgf/mm^2$, more preferably 480-582 $kgf/mm^2$, and further preferably 492-532 $kgf/mm^2$; and/or a height I for a falling ball test above 200 mm, preferably above 300 mm, and more preferably above 400 mm; and/or dielectric loss $tan\delta$ below $11.0 \times 10^{-3}$, preferably $7.0 \times 10^{-3}$-$10.5 \times 10^{-3}$, more preferably $7.2 \times 10^{-3}$-$9.8 \times 10^{-3}$, and further preferably $7.4 \times 10^{-3}$-$9.2 \times 10^{-3}$; and/or dielectric constant $\varepsilon_r$ of 5.5-8.5, preferably 6.0-8.0, more preferably 6.2-7.7, and further preferably 6.3-7.0; and/or a linear expansion coefficient $\alpha_{20°C-300°C}$ below $100 \times 10^{-7}/°C$, preferably $65 \times 10^{-7}/°C$-$100 \times 10^{-7}/°C$, more preferably $71 \times 10^{-7}/°C$-$95 \times 10^{-7}/°C$, and further preferably $75 \times 10^{-7}/°C$-$90 \times 10^{-7}/°C$.

9. Photosensitive microcrystalline glass, characterized by comprising the following components in percentage by weight: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; and 0.01-0.8% of $Ag_2O$, wherein $Li_2O/ZrO_2$ is 1.0-7.5, and the $R_2O$ is one or two of $Na_2O$ and $K_2O$.

10. The photosensitive microcrystalline glass according to embodiment 9, characterized by further comprising the following components in percentage by weight: 0-1% of $Sb_2O_3$; and/or 0-0.5% of $SnO_2$; and/or 0-5% of MO; and/or 0-5% of $Ln_2O_3$; and/or 0-1% of $Fe_2O_3$, wherein the MO is one or more of MgO, CaO, SrO, BaO, and ZnO, and $Ln_2O_3$ is one or more of $La_2O_3$, $Gd_2O_3$, and $Y_2O_3$.

11. Photosensitive microcrystalline glass, characterized by comprising the following components in percentage by weight: $SiO_2$, $R_2O$, $Li_2O$, $Al_2O_3$, $ZrO_2$, $CeO_2$ and $Ag_2O$, wherein $Li_2O/ZrO_2$ is 1.0-7.5, and the $R_2O$ is one or two of $Na_2O$ and $K_2O$.

12. The photosensitive microcrystalline glass according to embodiment 11, characterized by comprising the following components in percentage by weight: 65-78% of $SiO_2$; and/or 2-12% of $R_2O$; and/or 5-15% of $Li_2O$; and/or 3-12% of $Al_2O_3$; and/or 1.5-10% of $ZrO_2$; and/or 0.01-0.6% of $CeO_2$; and/or 0.01-0.8% of $Ag_2O$; and/or 0-1% of $Sb_2O_3$; and/or 0-0.5% of $SnO_2$; and/or 0-5% of MO; and/or 0-5% of $Ln_2O_3$; and/or 0-1% of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

13. The photosensitive microcrystalline glass according to any one of embodiments 9-12, characterized in that, components thereof in percentage by weight satisfy one or more of the following 7 circumstances:

1) $SiO_2/Li_2O$ is 5.5-10.0, preferably $SiO_2/Li_2O$ is 6.0-9.0, and more preferably $SiO_2/Li_2O$ is 7.0-8.5;

2) $(K_2O + Na_2O)/ZrO_2$ is 0.5-7.1, preferably $(K_2O + Na_2O)/ZrO_2$ is 0.7-4.5, and more preferably $(K_2O + Na_2O)/ZrO_2$ is 0.8-2.5;

3) $Li_2O/ZrO_2$ is 1.2-5.0, preferably $Li_2O/ZrO_2$ is 1.4-4.3, and more preferably $Li_2O/ZrO_2$ is 1.6-3.0;

4) $(SiO_2 + Li_2O)/ZrO_2$ is 8.0-55.0, preferably $(SiO_2 + Li_2O)/ZrO_2$ is 10.0-37.0, more preferably $(SiO_2 + Li_2O)/ZrO_2$ is 12.0-25.0, and further preferably $(SiO_2 + Li_2O)/ZrO_2$ is 13.0-20.0;

5) $(SiO_2 + Al_2O_3)/(Li_2O + Na_2O + K_2O)$ is 3.0-7.5, preferably $(SiO_2 + Al_2O_3)/(Li_2O + Na_2O + K_2O)$ is 3.7-6.5, more preferably $(SiO_2 + Al_2O_3)/(Li_2O + Na_2O + K_2O)$ is 4.3-6.0, and further preferably $(SiO_2 + Al_2O_3)/(Li_2O + Na_2O + K_2O)$ is 4.8-5.8;

6) $R_2O + Li_2O + Al_2O_3$ is 15-30%, preferably $R_2O + Li_2O + Al_2O_3$ is 17.5-29.5%, more preferably $R_2O + Li_2O + Al_2O_3$ is 18.5-26%, and further preferably $R_2O + Li_2O + Al_2O_3$ is 20-25%; and

7) $MO/ZrO_2$ is below 2.5, preferably $MO/ZrO_2$ is below 1.5, and more preferably $MO/ZrO_2$ is below 0.5,

the MO is one or more of MgO, CaO, SrO, BaO, and ZnO, and $R_2O$ is one or two of $Na_2O$ and $K_2O$.

14. The photosensitive microcrystalline glass according to any one of embodiments 9-12, characterized in that, components thereof in percentage by weight satisfy one or more of the following 7 circumstances:

1) $(Sb_2O_3 + SnO_2)/Ag_2O$ is 0.1-5.0, preferably $(Sb_2O_3 + SnO_2)/Ag_2O$ is 0.5-3.5, and more preferably $(Sb_2O_3 + SnO_2)/Ag_2O$ is 1.0-2.6;

2) $Ag_2O/CeO_2$ is 1.0-10.0, preferably $Ag_2O/CeO_2$ is 1.5-6.5, and more preferably $Ag_2O/CeO_2$ is 2.0-4.5;

3) $ZrO_2/(Ag_2O + CeO_2)$ is 2.3-50.0, preferably $ZrO_2/(Ag_2O + CeO_2)$ is 6.5-35.0, more preferably $ZrO_2/(Ag_2O + CeO_2)$ is 8.5-20.0, and further preferably $ZrO_2/(Ag_2O + CeO_2)$ is 11.0-18.0;

4) $(Ag_2O + SnO_2 + Sb_2O_3)/CeO_2$ is 1.0-30.0, preferably $(Ag_2O + SnO_2 + Sb_2O_3)/CeO_2$ is 3.0-20.0, more preferably $(Ag_2O + SnO_2 + Sb_2O_3)/CeO_2$ is 5.0-12.5, and further preferably $(Ag_2O + SnO_2 + Sb_2O_3)/CeO_2$ is 7.5-10.0;

5) $(Sb_2O_3 + SnO_2 + CeO_2)/Ag_2O$ is 0.1-10.0, preferably $(Sb_2O_3 + SnO_2 + CeO_2)/Ag_2O$ is 0.4-5.0, more preferably

$(Sb_2O_3 + SnO_2 + CeO_2)/Ag_2O$ is 0.7-3.7, and further preferably $(Sb_2O_3 + SnO_2 + CeO_2)/Ag_2O$ is 1.5-3.2;

6) $SnO_2/(CeO_2 + SnO_2)$ is 0-0.9, preferably $SnO_2/(CeO_2 + SnO_2)$ is 0-0.6, and more preferably $SnO_2/(CeO_2 + SnO_2)$ is 0-0.5; and

7) $Sb_2O_3 + SnO_2$ is 0.05-1.2%, preferably $Sb_2O_3 + SnO_2$ is 0.1-1%, and more preferably $Sb_2O_3 + SnO_2$ is 0.2-0.7%.

15. The photosensitive microcrystalline glass according to any one of embodiments 9-12, characterized by comprising the following components in percentage by weight: 68-77% of $SiO_2$, preferably 69.5-75.5% of $SiO_2$; and/or 3-10% of $R_2O$, preferably 4-8% of $R_2O$; and/or 7-13% of $Li_2O$, preferably 8.5-12% of $Li_2O$; and/or 4-10% of $Al_2O_3$, preferably 5-9% of $Al_2O_3$; and/or 2-8% of $ZrO_2$, preferably 3-6.5% of $ZrO_2$; and/or 0.07-0.4% of $CeO_2$, preferably 0.08-0.3% of $CeO_2$; and/or 0.1-0.6% of $Ag_2O$, preferably 0.2-0.5% of $Ag_2O$; and/or 0.01-0.7% of $Sb_2O_3$, preferably 0.07-0.5% of $Sb_2O_3$; and/or 0-0.3% of $SnO_2$, preferably 0-0.2% of $SnO_2$; and/or 0-3% of MO, preferably 0-1% of MO, more preferably free of MO; and/or 0-3% of $Ln_2O_3$, preferably 0-1% of $Ln_2O_3$, more preferably free of $Ln_2O_3$; and/or 0-0.5% of $Fe_2O_3$, preferably 0-0.2% of $Fe_2O_3$, more preferably free of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

16. The photosensitive microcrystalline glass according to any one of embodiments 9-12, characterized in that, the photosensitive microcrystalline glass comprises one or more blackened parts and one or more transparent parts; or the photosensitive microcrystalline glass as a whole is a blackened part.

17. The photosensitive microcrystalline glass according to embodiment 16, characterized in that, the photosensitive microcrystalline glass comprises a lithium silicate crystalline phase, preferably a lithium metasilicate crystalline phase, and more preferably in the blackened part of the photosensitive microcrystalline glass, the lithium metasilicate crystalline phase having a weight percentage of 5-50%, further preferably in the blackened part of the photosensitive microcrystalline glass, the lithium metasilicate crystalline phase having a weight percentage of 5-40%, and even further preferably in the blackened part of the photosensitive microcrystalline glass, the lithium metasilicate crystalline phase having a weight percentage of 10-30%.

18. The photosensitive microcrystalline glass according to embodiment 16, characterized in that, the transparent part of the photosensitive microcrystalline glass with a thickness of 0.2-1.5 mm has an average transmittance $T_{400-800\,nm}$ above 85.0%, preferably above 88.0%, more preferably above 90.0%, further preferably above 91.0%, and even further preferably 91.5-95.0% at a wave band range of 400-800 nm; and/or the blackened part of the photosensitive microcrystalline glass with a thickness of 0.2-1.5 mm has an average transmittance $T_{400-800\,nm}$ below 5.0%, preferably below 3.0%, more preferably below 1.5%, further preferably below 1.2%, and even further preferably below 0.5% at a wave band range of 400-800 nm; and/or the blackened part of the photosensitive microcrystalline glass with a thickness of 0.2-1.5 mm has a transmittance $T_{870\,nm}$ below 15.0%, preferably 0.1-12.5%, more preferably 0.1-10%, further preferably 0.1-8.0%, and even further preferably 0.1-5.0% at 870 nm; and/or the blackened part of the photosensitive microcrystalline glass with a thickness of 0.2-1.5 mm has a transmittance $T_{940\,nm}$ below 50.0%, preferably 0.1-35.0%, more preferably 0.3-20.0%, further preferably 0.3-15.0%, and even further preferably 0.3-10.0% at 940 nm.

19. The photosensitive microcrystalline glass according to embodiment 18, characterized in that, the photosensitive microcrystalline glass has a thickness of 0.5-1.5 mm, preferably 0.8-1.2 mm, more preferably 0.5 mm, 0.7 mm, 0.8 mm, 0.9 mm, 1.0 mm, 1.1 mm, 1.2 mm.

20. A photosensitive microcrystalline glass product, characterized by comprising the following components in percentage by weight: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; 0.01-0.8% of $Ag_2O$, wherein $Li_2O/ZrO_2$ is 1.0-7.5, and the $R_2O$ is one or two of $Na_2O$ and $K_2O$.

21. The photosensitive microcrystalline glass product according to embodiment 20, characterized by further comprising the following components in percentage by weight: 0-1% of $Sb_2O_3$; and/or 0-0.5% of $SnO_2$; and/or 0-5% of MO; and/or 0-5% of $Ln_2O_3$; and/or 0-1% of $Fe_2O_3$, wherein the MO is one or more of MgO, CaO, SrO, BaO, and ZnO, and $Ln_2O_3$ is one or more of $La_2O_3$, $Gd_2O_3$, and $Y_2O_3$.

22. A photosensitive microcrystalline glass product, characterized by comprising the following components in percentage by weight: $SiO_2$, $R_2O$, $Li_2O$, $Al_2O_3$, $ZrO_2$, $CeO_2$ and $Ag_2O$, wherein $Li_2O/ZrO_2$ is 1.0-7.5, and the $R_2O$ is one or two of $Na_2O$ and $K_2O$.

23. The photosensitive microcrystalline glass product according to embodiment 22, characterized by comprising the following components in percentage by weight: 65-78% of $SiO_2$; and/or 2-12% of $R_2O$; and/or 5-15% of $Li_2O$; and/or 3-12% of $Al_2O_3$; and/or 1.5-10% of $ZrO_2$; and/or 0.01-0.6% of $CeO_2$; and/or 0.01-0.8% of $Ag_2O$; and/or 0-1% of $Sb_2O_3$; and/or 0-0.5% of $SnO_2$; and/or 0-5% of MO; and/or 0-5% of $Ln_2O_3$; and/or 0-1% of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

24. The photosensitive microcrystalline glass product according to any one of embodiments 20-23, characterized in that, components thereof in percentage by weight satisfy one or more of the following 7 circumstances:

1) $SiO_2/Li_2O$ is 5.5-10.0, preferably $SiO_2/Li_2O$ is 6.0-9.0, and more preferably $SiO_2/Li_2O$ is 7.0-8.5;

2) $(K_2O + Na_2O)/ZrO_2$ is 0.5-7.1, preferably $(K_2O + Na_2O)/ZrO_2$ is 0.7-4.5, and more preferably $(K_2O + Na_2O)/ZrO_2$ is 0.8-2.5;

3) $Li_2O/ZrO_2$ is 1.2-5.0, preferably $Li_2O/ZrO_2$ is 1.4-4.3, and more preferably $Li_2O/ZrO_2$ is 1.6-3.0;

4) $(SiO_2 + Li_2O)/ZrO_2$ is 8.0-55.0, preferably $(SiO_2 + Li_2O)/ZrO_2$ is 10.0-37.0, more preferably $(SiO_2 + Li_2O)/ZrO_2$ is 12.0-25.0, and further preferably $(SiO_2 + Li_2O)/ZrO_2$ is 13.0-20.0;

5) $(SiO_2 + Al_2O_3)/(Li_2O + Na_2O + K_2O)$ is 3.0-7.5, preferably $(SiO_2 + Al_2O_3)/(Li_2O + Na_2O + K_2O)$ is 3.7-6.5, more preferably $(SiO_2 + Al_2O_3)/(Li_2O + Na_2O + K_2O)$ is 4.3-6.0, and further preferably $(SiO_2 + Al_2O_3)/(Li_2O + Na_2O + K_2O)$ is 4.8-5.8;

6) $R_2O + Li_2O + Al_2O_3$ is 15-30%, preferably $R_2O + Li_2O + Al_2O_3$ is 17.5-29.5%, more preferably $R_2O + Li_2O + Al_2O_3$ is 18.5-26%, and further preferably $R_2O + Li_2O + Al_2O_3$ is 20-25%; and

7) $MO/ZrO_2$ is below 2.5, preferably $MO/ZrO_2$ is below 1.5, and more preferably $MO/ZrO_2$ is below 0.5,

the MO is one or more of MgO, CaO, SrO, BaO, and ZnO, and $R_2O$ is one or two of $Na_2O$ and $K_2O$.

25. The photosensitive microcrystalline glass product according to any one of embodiments 20-23, characterized in that, components thereof in percentage by weight satisfy one or more of the following 7 circumstances:

1) $(Sb_2O_3 + SnO_2)/Ag_2O$ is 0.1-5.0, preferably $(Sb_2O_3 + SnO_2)/Ag_2O$ is 0.5-3.5, and more preferably $(Sb_2O_3 + SnO_2)/Ag_2O$ is 1.0-2.6;

2) $Ag_2O/CeO_2$ is 1.0-10.0, preferably $Ag_2O/CeO_2$ is 1.5-6.5, and more preferably $Ag_2O/CeO_2$ is 2.0-4.5;

3) $ZrO_2/(Ag_2O + CeO_2)$ is 2.3-50.0, preferably $ZrO_2/(Ag_2O + CeO_2)$ is 6.5-35.0, more preferably $ZrO_2/(Ag_2O + CeO_2)$ is 8.5-20.0, and further preferably $ZrO_2/(Ag_2O + CeO_2)$ is 11.0-18.0;

4) $(Ag_2O + SnO_2 + Sb_2O_3)/CeO_2$ is 1.0-30.0, preferably $(Ag_2O + SnO_2 + Sb_2O_3)/CeO_2$ is 3.0-20.0, more preferably $(Ag_2O + SnO_2 + Sb_2O_3)/CeO_2$ is 5.0-12.5, and further preferably $(Ag_2O + SnO_2 + Sb_2O_3)/CeO_2$ is 7.5-10.0;

5) $(Sb_2O_3 + SnO_2 + CeO_2)/Ag_2O$ is 0.1-10.0, preferably $(Sb_2O_3 + SnO_2 + CeO_2)/Ag_2O$ is 0.4-5.0, more preferably $(Sb_2O_3 + SnO_2 + CeO_2)/Ag_2O$ is 0.7-3.7, and further preferably $(Sb_2O_3 + SnO_2 + CeO_2)/Ag_2O$ is 1.5-3.2;

6) $SnO_2/(CeO_2 + SnO_2)$ is 0-0.9, preferably $SnO_2/(CeO_2 + SnO_2)$ is 0-0.6, and more preferably $SnO_2/(CeO_2 + SnO_2)$ is 0-0.5; and

7) $Sb_2O_3 + SnO_2$ is 0.05-1.2%, preferably $Sb_2O_3 + SnO_2$ is 0.1-1%, and more preferably $Sb_2O_3 + SnO_2$ is 0.2-0.7%.

26. The photosensitive microcrystalline glass product according to any one of embodiments 20-23, characterized by comprising the following components in percentage by weight: 68-77% of $SiO_2$, preferably 69.5-75.5% of $SiO_2$; and/or 3-10% of $R_2O$, preferably 4-8% of $R_2O$; and/or 7-13% of $Li_2O$, preferably 8.5-12% of $Li_2O$; and/or 4-10% of $Al_2O_3$, preferably 5-9% of $Al_2O_3$; and/or 2-8% of $ZrO_2$, preferably 3-6.5% of $ZrO_2$; and/or 0.07-0.4% of $CeO_2$, preferably 0.08-0.3% of $CeO_2$; and/or 0.1-0.6% of $Ag_2O$, preferably 0.2-0.5% of $Ag_2O$; and/or 0.01-0.7% of $Sb_2O_3$, preferably 0.07-0.5% of $Sb_2O_3$; and/or 0-0.3% of $SnO_2$, preferably 0-0.2% of $SnO_2$; and/or 0-3% of MO, preferably 0-1% of MO, more preferably free of MO; and/or 0-3% of $Ln_2O_3$, preferably 0-1% of $Ln_2O_3$, more preferably free of $Ln_2O_3$; and/or 0-0.5% of $Fe_2O_3$, preferably 0-0.2% of $Fe_2O_3$, more preferably free of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

27. The photosensitive microcrystalline glass product according to any one of embodiments 20-23, characterized in that, the photosensitive microcrystalline glass product comprises one or more blackened parts and one or more transparent parts; or the photosensitive microcrystalline glass product as a whole is a blackened part.

28. The photosensitive microcrystalline glass product according to embodiment 27, characterized in that, the photosensitive microcrystalline glass product comprises a lithium silicate crystalline phase, preferably a lithium metasilicate crystalline phase, and more preferably in the blackened part of the photosensitive microcrystalline glass product, the lithium metasilicate crystalline phase has a weight percentage of 5-50%, further preferably in the blackened part of the photosensitive microcrystalline glass product, the lithium metasilicate crystalline phase has a weight percentage of 5-40%, even further preferably in the blackened part of the photosensitive microcrystalline glass product, the lithium metasilicate crystalline phase has a weight percentage of 10-30%.

29. The photosensitive microcrystalline glass product according to embodiment 27, characterized in that, the transparent part of the photosensitive microcrystalline glass product with a thickness of 0.2-1.5 mm has an average transmittance $T_{400-800\,nm}$ above 85.0%, preferably above 88.0%, more preferably above 90.0%, further preferably above 91.0%, and even further preferably 91.5-95.0% at a wave band range of 400-800 nm; and/or the blackened part of the photosensitive microcrystalline glass product with a thickness of 0.2-1.5 mm has an average transmittance $T_{400-800\,nm}$ below 5.0%, preferably below 3.0%, more preferably below 1.5%, further preferably below 1.2%, and even further preferably below 0.5% at a wave band range of 400-800 nm; and/or the blackened part of the photosensitive microcrystalline glass product with a thickness of 0.2-1.5 mm has a transmittance $T_{870\ nm}$ below 15.0%, preferably 0.1-12.5%, more preferably 0.1-10%, further preferably 0.1-8.0%, and even further preferably 0.1-5.0% at 870 nm; and/or the blackened part of the photosensitive microcrystalline glass product with a thickness of 0.2-1.5 mm has a transmittance $T_{940\ nm}$ below 50.0%, preferably 0.1-35.0%, more preferably 0.3-20.0%, further preferably 0.3-15.0%, and even further preferably 0.3-10.0% at 940 nm.

30. The photosensitive microcrystalline glass product according to embodiment 29, characterized in that, the photosensitive microcrystalline glass product has a thickness of 0.5-1.5 mm, preferably 0.8-1.2 mm, more preferably 0.5 mm, 0.7 mm, 0.8 mm, 0.9 mm, 1.0 mm, 1.1 mm, 1.2 mm.

31. The photosensitive microcrystalline glass product according to any one of embodiments 20-23, characterized in that, the photosensitive microcrystalline glass product has a height II for a falling ball test above 800 mm, preferably above 900 mm, more preferably above 1,000 mm, and further preferably above 1,100 mm.

32. A glass cover plate, characterized by comprising the photosensitive glass material of any one of embodiments 1-8, and/or the photosensitive microcrystalline glass of any one of claims 9-19, and/or the photosensitive microcrystalline glass product of any one of claims 20-31.

33. A glass element, characterized by comprising the photosensitive glass material of any one of embodiments 1-8, and/or the photosensitive microcrystalline glass of any one of claims 9-19, and/or the photosensitive microcrystalline glass product of any one of claims 20-31.

34. A device, characterized by comprising the photosensitive glass material of any one of embodiments 1-8, and/or the photosensitive microcrystalline glass of any one of claims 9-19, and/or the photosensitive microcrystalline glass product of any one of claims 20-31, and/or the glass cover plate of claim 32, and/or the glass element of claim 33.

35. A method for preparing the photosensitive microcrystalline glass of any one of embodiments 9-19, characterized by comprising the following steps: forming a photosensitive glass material, and allowing the photosensitive glass material to form the photosensitive microcrystalline glass by a crystallization process.

36. The method for preparing the photosensitive microcrystalline glass according to embodiment 35, characterized in that, the crystallization process comprises subjecting the photosensitive glass material to mask exposure treatment, followed by crystallization heat treatment, and the mask exposure treatment comprises subjecting a specific position or region of the photosensitive glass material to UV exposure, at a UV wavelength preferably of 313 nm, for an exposure time preferably of 5-60 minutes.

37. The method for preparing the photosensitive microcrystalline glass according to embodiment 36, characterized in that, the crystallization heat treatment is performed in 2 stages, the 2-stage crystallization heat treatment comprises conducting treatment by a nucleation process at a first temperature, and then conducting treatment by a crystal growth process at a second temperature higher than the temperature of the nucleation process, preferably the first temperature is 490°C-520°C, preferably treatment time at the first temperature is 1-4 hours, preferably the second temperature is 540°C-620°C, and preferably treatment time at the second temperature is 1-8 hours.

38. A method for preparing the photosensitive microcrystalline glass product of any one of embodiments 20-31, characterized by comprising the following steps: forming the photosensitive glass material, allowing the photosensitive glass material to form the photosensitive microcrystalline glass by a crystallization process, and then allowing the photosensitive microcrystalline glass to form the photosensitive microcrystalline glass product by a chemically strengthening process.

39. The method for preparing the photosensitive microcrystalline glass product according to embodiment 38, characterized in that, the crystallization process comprises subjecting the photosensitive glass material to mask exposure treatment, followed by crystallization heat treatment, and the mask exposure treatment comprises subjecting a specific position or region of the photosensitive glass material to UV exposure, at a UV wavelength preferably of 313 nm, for an exposure time preferably of 5-60 minutes.

40. The method for preparing the photosensitive microcrystalline glass product according to embodiment 39, characterized in that, the crystallization heat treatment is performed in 2 stages, the 2-stage crystallization heat treatment comprises conducting treatment by a nucleation process at a first temperature, and then conducting treatment by a crystal growth process at a second temperature higher than the temperature of the nucleation process, preferably the first temperature is 490°C-520°C, preferably treatment time at the first temperature is 1-4 hours, preferably the second temperature is 540°C-620°C, and preferably treatment time at the second temperature is 1-8 hours.

41. The method for preparing the photosensitive microcrystalline glass product according to embodiment 38, characterized in that, the chemically strengthening process comprises immersing the photosensitive microcrystalline glass in a salt bath of melt Na salts, and/or K salts, and/or mixed Na salts and K salts at a temperature of 350°C-470°C for about 1-36 hours, preferably at the temperature of 380°C-460°C, preferably for a time of 2-24 hours.

**Claims**

1.  A photosensitive glass material, **characterized by** comprising the following components in percentage by weight: $SiO_2$, $R_2O$, $Li_2O$, $Al_2O_3$, $ZrO_2$, $CeO_2$ and $Ag_2O$, wherein $Li_2O/ZrO_2$ is 1.0-7.5, the $R_2O$ is one or two of $Na_2O$ and $K_2O$, and dielectric loss $tan\delta$ of the photosensitive glass material is below $11.0 \times 10^{-3}$.

2.  The photosensitive glass material according to claim 1, **characterized by** comprising the following components in percentage by weight: 65-78% of $SiO_2$; and/or 2-12% of $R_2O$; and/or 5-15% of $Li_2O$; and/or 3-12% of $Al_2O_3$; and/or 1.5-10% of $ZrO_2$; and/or 0.01-0.6% of $CeO_2$; and/or 0.01-0.8% of $Ag_2O$; and/or 0-1% of $Sb_2O_3$; and/or 0-0.5% of $SnO_2$; and/or 0-5% of MO; and/or 0-5% of $Ln_2O_3$; and/or 0-1% of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

3.  The photosensitive glass material according to claim 1, **characterized in that**, components thereof in percentage by weight satisfy one or more of the following 14 circumstances:

    1) $SiO_2/Li_2O$ is 5.5-10.0;
    2) $(K_2O + Na_2O)/ZrO_2$ is 0.5-7.1;
    3) $Li_2O/ZrO_2$ is 1.2-5.0;
    4) $(SiO_2 + Li_2O)/ZrO_2$ is 8.0-55.0;
    5) $(SiO_2 + Al_2O_3)/(Li_2O + Na_2O + K_2O)$ is 3.0-7.5;
    6) $R_2O + Li_2O + Al_2O_3$ is 15-30%;
    7) $MO/ZrO_2$ is below 2.5;
    8) $(Sb_2O_3 + SnO_2)/Ag_2O$ is 0.1-5.0;
    9) $Ag_2O/CeO_2$ is 1.0-10.0;
    10) $ZrO_2/(Ag_2O+CeO_2)$ is 2.3-50.0;
    11) $(Ag_2O + SnO_2+Sb_2O_3)/CeO_2$ is 1.0-30.0;
    12) $(Sb_2O_3 + SnO_2 + CeO_2)/Ag_2O$ is 0.1-10.0;
    13) $SnO_2/(CeO_2 + SnO_2)$ is 0-0.9; and
    14) $Sb_2O_3 + SnO_2$ is 0.05-1.2%,

    the MO is one or more of MgO, CaO, SrO, BaO, and ZnO, and $R_2O$ is one or two of $Na_2O$ and $K_2O$.

4.  The photosensitive glass material according to claim 1, **characterized in that**, components thereof in percentage by weight satisfy one or more of the following 14 circumstances:

    1) $SiO_2/Li_2O$ is 7.0-8.5;
    2) $(K_2O + Na_2O)/ZrO_2$ is 0.8-2.5;
    3) $Li_2O/ZrO_2$ is 1.6-3.0;
    4) $(SiO_2 + Li_2O)/ZrO_2$ is 13.0-20.0;
    5) $(SiO_2 + Al_2O_3)/(Li_2O + Na_2O + K_2O)$ is 4.8-5.8;
    6) $R_2O + Li_2O + Al_2O_3$ is 20-25%;
    7) $MO/ZrO_2$ is below 0.5;
    8) $(Sb_2O_3 + SnO_2)/Ag_2O$ is 1.0-2.6;
    9) $Ag_2O/CeO_2$ is 2.0-4.5;
    10) $ZrO_2/(Ag_2O + CeO_2)$ is 11.0-18.0;
    11) $(Ag_2O + SnO_2 + Sb_2O_3)/CeO_2$ is 7.5-10.0;
    12) $(Sb_2O_3 + SnO_2 + CeO_2)/Ag_2O$ is 1.5-3.2;
    13) $SnO_2/(CeO_2 + SnO_2)$ is 0-0.5; and
    14) $Sb_2O_3 + SnO_2$ is 0.2-0.7%,

    the MO is one or more of MgO, CaO, SrO, BaO, and ZnO, and $R_2O$ is one or two of $Na_2O$ and $K_2O$.

5.  The photosensitive glass material according to claim 1, **characterized by** comprising the following components in percentage by weight: 69.5-75.5% of $SiO_2$; and/or 4-8% of $R_2O$; and/or 8.5-12% of $Li_2O$; and/or 5-9% of $Al_2O_3$; and/or 3-6.5% of $ZrO_2$; and/or 0.08-0.3% of $CeO_2$; and/or 0.2-0.5% of $Ag_2O$; and/or 0.07-0.5% of $Sb_2O_3$; and/or 0-0.2% of $SnO_2$; and/or 0-1% of MO; and/or 0-1% of $Ln_2O_3$; and/or 0-0.2% of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

6. The photosensitive glass material according to claim 1, **characterized in that**, the photosensitive glass material has refractive index $n_d$ of 1.51-1.55; and/or Young's modulus E of $7,000 \times 10^7$ Pa-$9,500 \times 10^7$ Pa; and/or Knoop hardness $Hk_{0.1}$ of no less than 450 kgf/mm$^2$; and/or a height I for a falling ball test of no less than 200 mm; and/or dielectric loss $\tan\delta$ of $7.0 \times 10^{-3}$-$10.5 \times 10^{-3}$; and/or dielectric constant $\varepsilon_r$ of 5.5-8.5; and/or a linear expansion coefficient $\alpha_{20°C-300°C}$ below $100 \times 10^{-7}$/°C.

7. Photosensitive microcrystalline glass, **characterized by** comprising the following components in percentage by weight: $SiO_2$, $R_2O$, $Li_2O$, $Al_2O_3$, $ZrO_2$, $CeO_2$ and $Ag_2O$, wherein $Li_2O/ZrO_2$ is 1.0-7.5, and the $R_2O$ is one or two of $Na_2O$ and $K_2O$.

8. The photosensitive microcrystalline glass according to claim 7, **characterized by** comprising the following components in percentage by weight: 65-78% of $SiO_2$; and/or 2-12% of $R_2O$; and/or 5-15% of $Li_2O$; and/or 3-12% of $Al_2O_3$; and/or 1.5-10% of $ZrO_2$; and/or 0.01-0.6% of $CeO_2$; and/or 0.01-0.8% of $Ag_2O$; and/or 0-1% of $Sb_2O_3$; and/or 0-0.5% of $SnO_2$; and/or 0-5% of MO; and/or 0-5% of $Ln_2O_3$; and/or 0-1% of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

9. The photosensitive microcrystalline glass according to claim 7, **characterized in that**, components thereof in percentage by weight satisfy one or more of the following 14 circumstances:

   1) $SiO_2/Li_2O$ is 5.5-10.0;
   2) $(K_2O + Na_2O)/ZrO_2$ is 0.5-7.1;
   3) $Li_2O/ZrO_2$ is 1.2-5.0;
   4) $(SiO_2 + Li_2O)/ZrO_2$ is 8.0-55.0;
   5) $(SiO_2 + Al_2O_3)/(Li_2O + Na_2O + K_2O)$ is 3.0-7.5;
   6) $R_2O + Li_2O + Al_2O_3$ is 15-30%;
   7) $MO/ZrO_2$ is below 2.5;
   8) $(Sb_2O_3 + SnO_2)/Ag_2O$ is 0.1-5.0;
   9) $Ag_2O/CeO_2$ is 1.0-10.0;
   10) $ZrO_2/(Ag_2O+CeO_2)$ is 2.3-50.0;
   11) $(Ag_2O + SnO_2+Sb_2O_3)/CeO_2$ is 1.0-30.0;
   12) $(Sb_2O_3 + SnO_2 + CeO_2)/Ag_2O$ is 0.1-10.0;
   13) $SnO_2/(CeO_2 + SnO_2)$ is 0-0.9; and
   14) $Sb_2O_3 + SnO_2$ is 0.05-1.2%,

   the MO is one or more of MgO, CaO, SrO, BaO, and ZnO, and $R_2O$ is one or two of $Na_2O$ and $K_2O$.

10. The photosensitive microcrystalline glass according to claim 7, **characterized in that**, components thereof in percentage by weight satisfy one or more of the following 14 circumstances:

    1) $SiO_2/Li_2O$ is 7.0-8.5;
    2) $(K_2O + Na_2O)/ZrO_2$ is 0.8-2.5;
    3) $Li_2O/ZrO_2$ is 1.6-3.0;
    4) $(SiO_2 + Li_2O)/ZrO_2$ is 13.0-20.0;
    5) $(SiO_2 + Al_2O_3)/(Li_2O + Na_2O + K_2O)$ is 4.8-5.8;
    6) $R_2O + Li_2O + Al_2O_3$ is 20-25%;
    7) $MO/ZrO_2$ is below 0.5;
    8) $(Sb_2O_3 + SnO_2)/Ag_2O$ is 1.0-2.6;
    9) $Ag_2O/CeO_2$ is 2.0-4.5;
    10) $ZrO_2/(Ag_2O + CeO_2)$ is 11.0-18.0;
    11) $(Ag_2O + SnO_2 + Sb_2O_3)/CeO_2$ is 7.5-10.0;
    12) $(Sb_2O_3 + SnO_2 + CeO_2)/Ag_2O$ is 1.5-3.2;
    13) $SnO_2/(CeO_2 + SnO_2)$ is 0-0.5; and
    14) $Sb_2O_3 + SnO_2$ is 0.2-0.7%,

    the MO is one or more of MgO, CaO, SrO, BaO, and ZnO, and $R_2O$ is one or two of $Na_2O$ and $K_2O$.

11. The photosensitive microcrystalline glass according to claim 7, **characterized by** comprising the following components in percentage by weight: 69.5-75.5% of $SiO_2$; and/or 4-8% of $R_2O$; and/or 8.5-12% of $Li_2O$; and/or 5-9% of

$Al_2O_3$; and/or 3-6.5% of $ZrO_2$; and/or 0.08-0.3% of $CeO_2$; and/or 0.2-0.5% of $Ag_2O$; and/or 0.07-0.5% of $Sb_2O_3$; and/or 0-0.2% of $SnO_2$; and/or 0-3% of MO; and/or 0-3% of $Ln_2O_3$; and/or 0-0.5% of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

12. The photosensitive microcrystalline glass according to claim 7, **characterized in that**, the photosensitive microcrystalline glass comprises one or more blackened parts and one or more transparent parts, or the photosensitive microcrystalline glass as a whole is a blackened part, the photosensitive microcrystalline glass comprises a lithium metasilicate crystalline phase, and in the blackened part of the photosensitive microcrystalline glass, the lithium metasilicate crystalline phase has a weight percentage of 5-40%.

13. The photosensitive microcrystalline glass according to claim 12, **characterized in that**, the transparent part of the photosensitive microcrystalline glass with a thickness of 0.2-1.5 mm has an average transmittance $T_{400\text{-}800\,nm}$ above 85.0% at a wave band range of 400-800 nm; and/or the blackened part of the photosensitive microcrystalline glass with a thickness of 0.2-1.5 mm has an average transmittance $T_{400\text{-}800\,nm}$ above 5.0% at a wave band range of 400-800 nm ; and/or the blackened part of the photosensitive microcrystalline glass with a thickness of 0.2-1.5 mm has a transmittance $T_{870\,nm}$ below 15.0% at 870 nm; and/or the blackened part of the photosensitive microcrystalline glass with a thickness of 0.2-1.5 mm has a transmittance $T_{940\,nm}$ below 50.0% at 940 nm.

14. The photosensitive microcrystalline glass according to claim 12, **characterized in that**, the transparent part of the photosensitive microcrystalline glass with a thickness of 0.2-1.5 mm has an average transmittance $T_{400\text{-}800\,nm}$ of 91.5-95.0% at a wave band range of 400-800 nm; and/or the blackened part of the photosensitive microcrystalline glass with a thickness of 0.2-1.5 mm has an average transmittance $T_{400\text{-}800\,nm}$ below 0.5% at a wave band range of 400-800 nm; and/or the blackened part of the photosensitive microcrystalline glass with a thickness of 0.2-1.5 mm has a transmittance $T_{870\,nm}$ of 0. 1-5.0% at 870 nm; and/or the blackened part of the photosensitive microcrystalline glass with a thickness of 0.2-1.5 mm has a transmittance $T_{940\,nm}$ of 0.3-10.0% at 940 nm.

15. A photosensitive microcrystalline glass product, **characterized by** comprising the following components in percentage by weight: $SiO_2$, $R_2O$, $Li_2O$, $Al_2O_3$, $ZrO_2$, $CeO_2$ and $Ag_2O$, wherein $Li_2O/ZrO_2$ is 1.0-7.5, and the $R_2O$ is one or two of $Na_2O$ and $K_2O$.

16. The photosensitive microcrystalline glass product according to claim 15, **characterized by** comprising the following components in percentage by weight: 65-78% of $SiO_2$; and/or 2-12% of $R_2O$; and/or 5-15% of $Li_2O$; and/or 3-12% of $Al_2O_3$; and/or 1.5-10% of $ZrO_2$; and/or 0.01-0.6% of $CeO_2$; and/or 0.01-0.8% of $Ag_2O$; and/or 0-1% of $Sb_2O_3$; and/or 0-0.5% of $SnO_2$; and/or 0-5% of MO; and/or 0-5% of $Ln_2O_3$; and/or 0-1% of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

17. The photosensitive microcrystalline glass product according to claim 15, **characterized in that**, components thereof in percentage by weight satisfy one or more of the following 14 circumstances:

   1) $SiO_2/Li_2O$ is 5.5-10.0;
   2) $(K_2O + Na_2O)/ZrO_2$ is 0.5-7.1;
   3) $Li_2O/ZrO_2$ is 1.2-5.0;
   4) $(SiO_2 + Li_2O)/ZrO_2$ is 8.0-55.0;
   5) $(SiO_2 + Al_2O_3)/(Li_2O + Na_2O + K_2O)$ is 3.0-7.5;
   6) $R_2O + Li_2O + Al_2O_3$ is 15-30%;
   7) $MO/ZrO_2$ is below 2.5;
   8) $(Sb_2O_3 + SnO_2)/Ag_2O$ is 0.1-5.0;
   9) $Ag_2O/CeO_2$ is 1.0-10.0;
   10) $ZrO_2/(Ag_2O+CeO_2)$ is 2.3-50.0;
   11) $(Ag_2O + SnO_2+Sb_2O_3)/CeO_2$ is 1.0-30.0;
   12) $(Sb_2O_3 + SnO_2 + CeO_2)/Ag_2O$ is 0.1-10.0;
   13) $SnO_2/(CeO_2 + SnO_2)$ is 0-0.9; and
   14) $Sb_2O_3 + SnO_2$ is 0.05-1.2%,

   the MO is one or more of MgO, CaO, SrO, BaO, and ZnO, and $R_2O$ is one or two of $Na_2O$ and $K_2O$.

18. The photosensitive microcrystalline glass product according to claim 15, **characterized in that**, components thereof in percentage by weight satisfy one or more of the following 14 circumstances:

    1) $SiO_2/Li_2O$ is 7.0-8.5;
    2) $(K_2O + Na_2O)/ZrO_2$ is 0.8-2.5;
    3) $Li_2O/ZrO_2$ is 1.6-3.0;
    4) $(SiO_2 + Li_2O)/ZrO_2$ is 13.0-20.0;
    5) $(SiO_2 + Al_2O_3)/(Li_2O + Na_2O + K_2O)$ is 4.8-5.8;
    6) $R_2O + Li_2O + Al_2O_3$ is 20-25%;
    7) $MO/ZrO_2$ is below 0.5;
    8) $(Sb_2O_3 + SnO_2)/Ag_2O$ is 1.0-2.6;
    9) $Ag_2O/CeO_2$ is 2.0-4.5;
    10) $ZrO_2/(Ag_2O + CeO_2)$ is 11.0-18.0;
    11) $(Ag_2O + SnO_2 + Sb_2O_3)/CeO_2$ is 7.5-10.0;
    12) $(Sb_2O_3 + SnO_2 + CeO_2)/Ag_2O$ is 1.5-3.2;
    13) $SnO_2/(CeO_2 + SnO_2)$ is 0-0.5; and
    14) $Sb_2O_3 + SnO_2$ is 0.2-0.7%,

the MO is one or more of MgO, CaO, SrO, BaO, and ZnO, and $R_2O$ is one or two of $Na_2O$ and $K_2O$.

19. The photosensitive microcrystalline glass product according to claim 15, **characterized by** comprising the following components in percentage by weight: 69.5-75.5% of $SiO_2$; and/or 4-8% of $R_2O$; and/or 8.5-12% of $Li_2O$; and/or 5-9% of $Al_2O_3$; and/or 3-6.5% of $ZrO_2$; and/or 0.08-0.3% of $CeO_2$; and/or 0.2-0.5% of $Ag_2O$; and/or 0.07-0.5% of $Sb_2O_3$; and/or 0-0.2% of $SnO_2$; and/or 0-1% of MO; and/or 0-1% of $Ln_2O_3$; and/or 0-0.2% of $Fe_2O_3$, wherein the $R_2O$ is one or two of $Na_2O$ and $K_2O$, MO is one or more of MgO, CaO, SrO, BaO, and ZnO, and $Ln_2O_3$ is one or more of $La_2O_3$, $Gd_2O_3$, and $Y_2O_3$.

20. The photosensitive microcrystalline glass product according to claim 15, **characterized in that**, the photosensitive microcrystalline glass product comprises one or more blackened parts and one or more transparent parts, or the photosensitive microcrystalline glass product as a whole is a blackened part, the photosensitive microcrystalline glass product comprises a lithium metasilicate crystalline phase, and in the blackened part of the photosensitive microcrystalline glass product, the lithium metasilicate crystalline phase has a weight percentage of 5-40%.

21. The photosensitive microcrystalline glass product according to claim 20, **characterized in that**, the transparent part of the photosensitive microcrystalline glass product with a thickness of 0.2-1.5 mm has an average transmittance $T_{400\text{-}800\ nm}$ above 85.0% at a wave band range of 400-800 nm; and/or the blackened part of the photosensitive microcrystalline glass product with a thickness of 0.2-1.5 mm has an average transmittance $T_{400\text{-}800\ nm}$ above 5.0% at a wave band range of 400-800 nm; and/or the blackened part of the photosensitive microcrystalline glass product with a thickness of 0.2-1.5 mm has a transmittance $T_{870\ nm}$ below 15.0% at 870 nm; and/or the blackened part of the photosensitive microcrystalline glass product with a thickness of 0.2-1.5 mm has a transmittance $T_{940\ nm}$ below 50.0% at 940 nm; and/or the photosensitive microcrystalline glass product has a height II for a falling ball test above 800 mm.

22. The photosensitive microcrystalline glass product according to claim 20, **characterized in that**, the transparent part of the photosensitive microcrystalline glass product with a thickness of 0.2-1.5 mm has an average transmittance $T_{400\text{-}800\ nm}$ of 91.5-95.0% at a wave band range of 400-800 nm; and/or the blackened part of the photosensitive microcrystalline glass product with a thickness of 0.2-1.5 mm has an average transmittance $T_{400\text{-}800\ nm}$ below 0.5% at a wave band range of 400-800 nm; and/or the blackened part of the photosensitive microcrystalline glass product with a thickness of 0.2-1.5 mm has a transmittance $T_{870\ nm}$ of 0.1-5.0% at 870 nm; and/or the blackened part of the photosensitive microcrystalline glass product with a thickness of 0.2-1.5 mm has a transmittance $T_{940\ nm}$ of 0.3-10.0% at 940 nm; and/or the photosensitive microcrystalline glass product has a height II for a falling ball test above 1,000 mm.

23. A glass cover plate, **characterized by** comprising the photosensitive glass material of claim 1, and/or the photosensitive microcrystalline glass of claim 10, and/or the photosensitive microcrystalline glass product of claim 15.

24. A device, **characterized by** comprising the photosensitive glass material of claim 1, and/or the photosensitive microcrystalline glass of claim 7, and/or the photosensitive microcrystalline glass product of claim 15, and/or the glass cover plate of claim 23.

Europäisches
Patentamt

European
Patent Office

Office européen
des brevets

# EUROPEAN SEARCH REPORT

**Application Number**

EP 24 20 5734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 873 918 B (CHENGDU GUANGMING PHOTO ELECTRIC CO LTD) 8 August 2023 (2023-08-08) * the whole document * | 1-24 | INV. C03C3/095 C03C4/00 C03C4/04 C03C4/14 C03C10/00 C03C21/00 |
| A | CN 114 933 416 A (CHENGDU GUANGMING PHOTO ELECTRIC CO LTD) 23 August 2022 (2022-08-23) * the whole document * | 1-24 | |
| A | US 2002/010063 A1 (SCHWEIGER MARCEL [CH] ET AL) 24 January 2002 (2002-01-24) * paragraphs [0011] - [0022]; table 1 * | 1-24 | |
| A | US 2024/101467 A1 (KATO TAKEYUKI [JP] ET AL) 28 March 2024 (2024-03-28) * paragraphs [0010] - [0037], [0085] - [0147]; table 1 * | 1-24 | |

**TECHNICAL FIELDS SEARCHED (IPC)**

C03C

The present search report has been drawn up for all claims

| Place of search | Date of completion of the search | Examiner |
|---|---|---|
| Munich | 19 March 2025 | Lecerf, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5734

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | | Publication date | Patent family member(s) | | Publication date |
|---|---|---|---|---|---|
| CN 114873918 | B | 08-08-2023 | NONE | | |
| CN 114933416 | A | 23-08-2022 | NONE | | |
| US 2002010063 | A1 | 24-01-2002 | NONE | | |
| US 2024101467 | A1 | 28-03-2024 | CN | 117480137 A | 30-01-2024 |
| | | | DE | 112022001963 T5 | 15-02-2024 |
| | | | JP | WO2022255196 A1 | 08-12-2022 |
| | | | TW | 202248000 A | 16-12-2022 |
| | | | US | 2024101467 A1 | 28-03-2024 |
| | | | WO | 2022255196 A1 | 08-12-2022 |

EPO FORM P0459

For more details about this annex : see Official Journal of the European Patent Office, No. 12/82